(19) Europäisches Patentamt
European Patent Office
Office européen des brevets

(11) **EP 4 580 263 A1**

(12) **EUROPEAN PATENT APPLICATION**
published in accordance with Art. 153(4) EPC

(43) Date of publication:
**02.07.2025  Bulletin 2025/27**

(51) International Patent Classification (IPC):
**H04W 52/02** (2009.01)

(21) Application number: **23881590.6**

(22) Date of filing: **27.09.2023**

(52) Cooperative Patent Classification (CPC):
**H04W 52/02;** Y02D 30/70

(86) International application number:
**PCT/CN2023/122193**

(87) International publication number:
**WO 2024/088011 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2022  CN 202211321636
30.12.2022  CN 202211738572**

(71) Applicant: **Huawei Technologies Co., Ltd.
Shenzhen, Guangdong 518129 (CN)**

(72) Inventor: **LI, Qiang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR WAKING UP COMMUNICATION LINK**

(57) This application relates to the field of communication technologies, and provides a method and an apparatus for waking up a communication link. The method includes: A first device monitors a first part of wake-up information through a first link; when the first device receives the first part of the wake-up information and the first part includes an identifier of the first device or a group identifier of the first device, the first device monitors a second part of the wake-up information; and the first device wakes up a second link when the first device receives the second part, where power consumption of the second link is greater than power consumption of the first link. According to the method, power consumption of a wake-up link of a receive device can be reduced.

FIG. 4

## Description

This application claims priority to Chinese Patent Application No. 202211321636.7, filed with the China National Intellectual Property Administration on October 26, 2022 and entitled "ENCODING AND DECODING METHOD", and claims priority to Chinese Patent Application No. 202211738572.0, filed with the China National Intellectual Property Administration on December 30, 2022 and entitled "METHOD AND APPARATUS FOR WAKING UP COMMUNICATION LINK", which are incorporated herein by reference in their entireties.

## TECHNICAL FIELD

This application relates to the field of communication technologies, and in particular, to a method and an apparatus for waking up a communication link.

## BACKGROUND

In a modem wireless communication system, power consumption of a receive device (for example, a mobile phone or a wearable device) has important impact on user experience. In recent years, the industry has proposed a new receiver architecture of a receive device to reduce power consumption of the receive device. Receivers of the receive device are classified into a main receiver and a wake-up receiver. When the receive device is in a connected mode (connected mode), the main receiver is in an on state, and receives and sends control signaling and service data (for example, video data and picture data) through a main link (main radio). When the receive device is in an idle mode (idle mode), the main receiver enters a sleep state, and the wake-up receiver is in an on state, and receives, through a wake-up link (Wake Up Radio, WUR), wake-up information sent by a transmit device. Both complexity and power consumption of the main receiver are far greater than those of the wake-up receiver.

Generally, if there is no service data to be received or sent within a period of time, the receive device may enter an idle mode. In this case, the main receiver enters a sleep state, and the wake-up receiver is in an on state and continuously monitors, through the wake-up link, whether there is wake-up information sent to the receive device. When the wake-up receiver receives the wake-up information, the wake-up receiver triggers (that is, wakes up) the main receiver to enter an on state from the sleep state. After the main receiver enters the on state, the receive device enters a connected mode through a process like random access, and then normally receives and sends service data. In this receiver architecture, the main receiver is in the on state only when the main receiver needs to receive and send the service data, and is in the sleep state at another time, so that power consumption of the receive device can be reduced.

However, in the conventional technology, the receive device still needs to continuously monitor the wake-up information through the wake-up link, and especially, a decoder of the wake-up link needs to continuously decode received information. This still causes specific power consumption. How to reduce power consumption of the wake-up link of the receive device is a technical problem that needs to be resolved currently.

## SUMMARY

To reduce power consumption of a wake-up link of a receive device, embodiments of this application provide a method and an apparatus for waking up a communication link. The technical solutions are as follows.

According to a first aspect, a method for waking up a communication link is provided. The method includes: A first device monitors a first part of wake-up information through a first link; when the first device receives the first part of the wake-up information and the first part includes an identifier of the first device or a group identifier of the first device, the first device monitors a second part of the wake-up information; and the first device wakes up a second link when the first device receives the second part, where power consumption of the second link is greater than power consumption of the first link.

In the conventional technology, the device needs to decode complete wake-up information before determining whether the wake-up information is wake-up information for the device. Therefore, the device needs to decode each piece of wake-up information by using a long decoder. In this application, the wake-up information is split into at least two parts, the first part of the wake-up information may include an identifier or a group identifier of the device. The first device first decodes the first part of the wake-up information. If the first part of the wake-up information includes the identifier or the group identifier of the first device, the first device determines that the wake-up information is information used to wake up the first device. In this case, the first device may continue to monitor and decode the second part of the wake-up information. Because the wake-up information is divided into the at least two parts, the first device may decode the at least two parts of the wake-up information by respectively using at least two decoders (referred to as "short decoders" below) shorter than a decoder in the solution in the conventional technology. However, power consumption of performing decoding by using the at least two short decoders is less than power consumption of performing decoding by using the long decoder in the conventional technology. Therefore, in this embodiment, power consumption of the wake-up link of the first device (namely, a receive device) is reduced.

Optionally, that the first device monitors a second part of the wake-up information includes: The first device monitors the second part in a second time period, where there is an association relationship between the second time period and a first time period, and the first time period is a time period in which the first part is received.

In this embodiment, the first device determines, based on the association relationship between the second time period and the first time period, that second wake-up information needs to be monitored only in the second time period (namely, in a specified time period), and whether wake-up information exists in another time period does not need to be monitored. In this way, the first device does not perform an invalid monitoring operation in a period other than the second time period, so that power consumption of monitoring the wake-up information by the first device can be further reduced.

Optionally, that the first device monitors a second part of the wake-up information includes: The first device monitors the second part in a second time period, where the second time period is indicated by indication information in the first part.

In this embodiment, compared with that in a manner of predefining the second time period, the second time period is flexibly indicated by the indication information in the first part, so that flexibility of time domain resource scheduling by a communication system can be improved.

Optionally, a length of a decoder corresponding to the second part is greater than a length of a decoder corresponding to the first part.

Compared with that in a solution in which the first device decodes complete wake-up information by using a long decoder in the conventional technology, in this embodiment, the first device decodes the first part and the second part by using decoders of different lengths (namely, decoders of different complexity). For example, an information length of the first part is short, and the first device decodes the first part by using a shorter decoder, to reduce decoding power consumption. An information length of the second part is long, and the first device decodes the second part by using a long decoder, to ensure decoding reliability. It can be learned that the first device uses different decoders for different parts of the wake-up information, so that not only decoding power consumption can be reduced, but also decoding reliability can be ensured.

Optionally, a data amount of the first part is less than or equal to a data bearing amount in the first time period, a data amount of the second part is less than or equal to a data bearing amount in the second time period, the first time period is the time period in which the first part is received, and the second time period is a time period in which the first device monitors the second part.

In this embodiment, the data amount of the first part is less than or equal to the data bearing amount in the first time period, so that it can be ensured that the first part of wake-up data is received once and for all, and the first device does not need to receive the first part a plurality of times. The data amount of the second part is less than or equal to the data bearing amount in the second time period, so that it can be ensured that the second part of wake-up data is received once and for all, and the first device does not need to monitor the second part a plurality of times. Therefore, in this embodiment, power consumption of monitoring the wake-up data by the first device can be reduced.

Optionally, a data amount of the first part is the same as a data bearing amount in the first time period, a data amount of the second part is the same as a data bearing amount in the second time period, the first time period is the time period in which the first part is received, and the second time period is a time period in which the first device monitors the second part. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation.

In this embodiment, because the data amount of the first part is the same as the data bearing amount in the first time period, and the data amount of the second part is the same as the data bearing amount in the second time period, the first device may receive the first part once and for all in the first time period, and receive the second part once and for all in the second time period. In this way, receiving does not need to be performed in a plurality of time periods, to reduce receiving power consumption of the first device.

Optionally, the first part includes all or a part of information of a temporary mobile subscriber identity.

In this embodiment, because the temporary mobile subscriber identity is used to identify each different terminal (namely, a receive device), using all the information of the temporary mobile subscriber identity as the first part can not only avoid a probability that the first part wakes up a plurality of terminals to monitor the second part, but also avoid a "false alarm". In addition, some information is selected from the temporary mobile subscriber identity as the first part of the wake-up information, so that the probability that the first part wakes up the plurality of terminals to monitor the second part can be reduced.

Optionally, the method further includes: The first device skips an operation of monitoring the second part when any one of the following cases is met: the first device does not receive the first part, or the first part does not include the identifier of the first device or the group identifier of the first device.

In this embodiment, the first device first monitors the first part through the low-power first link. When the first device does not receive the first part, or the first part does not include the identifier of the first device or the group identifier of the first device, it indicates that the wake-up information is not sent to the first device (namely, the first device), and the first device does not need to monitor the second part or decode the second part, to reduce power consumption generated when the first device monitors and decodes the wake-up information.

Optionally, the first part includes a group identifier, and the second part includes a paging identifier.

In the conventional technology, a device is woken up by using complete wake-up information, and the device needs to decode the complete wake-up information before determining whether the wake-up information is wake-up information for the device. In this embodiment, the first device first determines, based on a received group identifier, whether the received wake-up information is wake-up information of a group to which the first device belongs, and if the received wake-up information is the wake-up information of the first device, the second part (namely, the paging identifier) of the wake-up information continues to be received, without decoding the complete wake-up information. This reduces power consumption of the wake-up link of the first device.

According to a second aspect, a method for waking up a communication link is provided. The method includes: A second device sends a first part of wake-up information through a first link, where the first part includes identifier information, and the first part indicates a target device corresponding to the identifier information to monitor a second part of the wake-up information; and the second device sends the second part, where the second part is used to wake up a second link of the target device, and power consumption of the second link is greater than power consumption of the first link.

In the conventional technology, a device needs to encode complete wake-up information before determining to send the wake-up information. Therefore, the device needs to encode each piece of wake-up information by using a long encoder. In this application, the wake-up information is split into at least two parts. The first part of the wake-up information includes identifier information. The second device uses at least two encoders (namely, a small-sized encoder, a simple encoder, or a short encoder) shorter than an encoder in the solution in the conventional technology to respectively encode the first part and the second part. Power consumption of encoding performed by the second device by using the at least two short encoders is less than power consumption of encoding performed by using one long encoder in the conventional technology. Correspondingly, the first device may use at least two decoders shorter than a decoder in the solution in the conventional technology to respectively decode the at least two parts of the wake-up information. This further reduces power consumption of the wake-up link of the first device (namely, a receive device).

Optionally, that the second device sends the second part includes: The second device sends the second part in a second time period, where there is an association relationship between the second time period and a first time period, and the first time period is a time period in which the second device sends the first part.

In this embodiment, based on the association relationship between the second time period and the first time period, the second device sends the first part to the target device in the first time period, and sends the second part in the second time period. After receiving the first part in the first time period, the target device determines, based on the association relationship between the second time period and the first time period, that the second part sent by the second device needs to be monitored only in the second time period, and that monitoring does not need to be performed in another time period. In this way, the target device does not perform an invalid monitoring operation in a time period other than the second time period, to reduce power consumption of monitoring the wake-up information by the second device.

Optionally, the first part further includes indication information, and that the second device sends the second part includes: The second device sends the second part in a second time period, where the indication information indicates the second time period.

In this embodiment, compared with that in a manner of predefining the second time period, the second time period is flexibly indicated by the indication information in the first part, so that flexibility of time domain resource scheduling by a communication system can be improved.

Optionally, a length of an encoder corresponding to the second part is greater than a length of an encoder corresponding to the first part.

Compared with that in a solution in which the second device encodes complete wake-up information by using a long encoder in the conventional technology, in this embodiment, the second device encodes the first part and the second part by using encoders of different lengths (namely, encoders of different complexity). For example, an information length of the first part is short, and the second device encodes the first part by using a short encoder, to reduce encoding power consumption. An information length of the second part is long, and the second device encodes the second part by using a long encoder, to ensure encoding reliability. It can be learned that the second device uses different encoders for different parts of the wake-up information, so that not only encoding power consumption can be reduced, but also encoding reliability can be ensured.

Optionally, a data amount of the first part is less than or equal to a data bearing amount in the first time period, a data amount of the second part is less than or equal to a data bearing amount in the second time period, the first time period is the time period in which the first part is sent, and the second time period is a time period in which the second part is sent.

In this embodiment, the data amount of the first part is less than or equal to the data bearing amount in the first time period, so that it can be ensured that the first part of wake-up data is sent once and for all, and the second device does not need to send the first part a plurality of times. The data amount of the second part is less than or equal to the data bearing amount in the second time period, so that it can be ensured that the second part of wake-up data is sent once and for all, and the second device does not need to send the second part a plurality of times. Therefore, in this embodiment, power consumption of sending the wake-up data by the second device can be reduced.

Optionally, a data amount of the first part is the same as a data bearing amount in the first time period, a data amount of the second part is the same as a data bearing amount in the second time period, the first time period is the time period in which the first part is sent, and the second time period is a time period in which the second part is sent. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation.

In this embodiment, because the data amount of the first part is the same as the data bearing amount in the first time period, and the data amount of the second part is the same as the data bearing amount in the second time period, the second device may send the first part once and for all in the first time period, and send the second part once and for all in the second time period, without sending the second part in a plurality of time periods, to reduce sending power consumption of the second device.

Optionally, the first part includes all or a part of information of a temporary mobile subscriber identity.

In this embodiment, because the temporary mobile subscriber identity is used to identify each different terminal (namely, a receive device), using all the information of the temporary mobile subscriber identity as the first part can not only avoid a probability that the first part wakes up a plurality of terminals to monitor the second part, but also avoid a "false alarm". In addition, some information is selected from the temporary mobile subscriber identity as the first part of the wake-up information, so that the probability that the first part wakes up the plurality of terminals to monitor the second part can be reduced.

Optionally, the first part includes a group identifier, and the second part includes a paging identifier.

In the conventional technology, the second device determines, by sending the group identifier, a group in which a device that needs to be woken up is located, and sends the second part (namely, the paging identifier) to the group in which the device is located, and another group (namely, a group other than the group in which the device is located) does not need to receive the second part.

According to a third aspect, an apparatus for waking up a communication link is provided. The apparatus includes a receiving module and a processing module. The receiving module is configured to monitor a first part of wake-up information through a first link, and is further configured to: when receiving the first part of the wake-up information and the first part includes an identifier of the apparatus or a group identifier of the apparatus, monitor a second part of the wake-up information; and the processing module is configured to wake up a second link when the receiving module receives the second part, where power consumption of the second link is greater than power consumption of the first link.

Optionally, the receiving module is further configured to monitor the second part in a second time period, where there is an association relationship between the second time period and a first time period, and the first time period is a time period in which the first part is received.

Optionally, the receiving module is further configured to monitor the second part in a second time period, where the second time period is indicated by indication information in the first part.

Optionally, a length of a decoder corresponding to the second part is greater than a length of a decoder corresponding to the first part.

Optionally, a data amount of the first part is less than or equal to a data bearing amount in the first time period, a data amount of the second part is less than or equal to a data bearing amount in the second time period, the first time period is the time period in which the first part is received, and the second time period is a time period in which the apparatus monitors the second part.

Optionally, a data amount of the first part is the same as a data bearing amount in the first time period, a data amount of the second part is the same as a data bearing amount in the second time period, the first time period is the time period in which the first part is received, and the second time period is a time period in which the apparatus monitors the second part. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation.

Optionally, the first part includes all or a part of information of a temporary mobile subscriber identity.

Optionally, the receiving module is further configured to skip an operation of monitoring the second part when any one of the following cases is met: the receiving module does not receive the first part, or the first part does not include the identifier of the apparatus or the group identifier of the apparatus.

Optionally, the first part includes a group identifier, and the second part includes a paging identifier.

According to a fourth aspect, an apparatus for waking up a communication link is provided. The apparatus includes a sending module, and the sending module is configured to send a first part of wake-up information through a first link, where the first part includes identifier information, and the first part indicates a target device corresponding to the identifier information to monitor a second part of the wake-up information; and is further configured to send the second part, where the second part is used to wake up a second link of the target device, and power consumption of the second link is greater than power consumption of the first link.

Optionally, the sending module is further configured to send the second part in a second time period, where there is an association relationship between the second time period and a first time period, and the first time period is a time period in which the sending module sends the first part.

Optionally, the first part further includes indication information, and the sending module is further configured to send the second part in a second time period, where the indication information indicates the second time period.

Optionally, a length of an encoder corresponding to the second part is greater than a length of an encoder corresponding to the first part.

Optionally, a data amount of the first part is less than or equal to a data bearing amount in the first time period, a data amount of the second part is less than or equal to a data bearing amount in the second time period, the first time period is the time period in which the first part is sent, and the second time period is a time period in which the second part is sent.

Optionally, a data amount of the first part is the same as a data bearing amount in the first time period, a data amount of the second part is the same as a data bearing amount in the second time period, the first time period is the time period in which the first part is sent, and the second time period is a time period in which the second part is sent. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation.

Optionally, the first part includes all or a part of information of a temporary mobile subscriber identity.

Optionally, the first part includes a group identifier, and the second part includes a paging identifier.

According to a fifth aspect, a device is provided, where the device includes a processor and a memory, the memory is configured to store a computer program, and the processor is configured to invoke the computer program from the memory and run the computer program, so that the device performs the method according to any one in the first aspect.

According to a sixth aspect, a device is provided, where the device includes a processor and a memory, the memory is configured to store a computer program, and the processor is configured to invoke the computer program from the memory and run the computer program, so that the device performs the method according to any one in the second aspect.

According to a seventh aspect, a computer-readable storage medium is provided, where the computer-readable storage medium stores a computer program, and when the computer program is executed by a processor, the processor is enabled to perform the method according to any one in the first aspect.

According to an eighth aspect, a computer-readable storage medium is provided, where the computer-readable storage medium stores a computer program, and when the computer program is executed by a processor, the processor is enabled to perform the method according to any one in the second aspect.

## BRIEF DESCRIPTION OF DRAWINGS

FIG. 1 is a diagram of an application scenario according to an embodiment of this application;
FIG. 2 is a diagram of a typical structure of a communication system according to an embodiment of this application;
FIG. 3 is a diagram of working principles of a second device and a first device according to an embodiment of this application;
FIG. 4 is an interaction diagram of a method for waking up a communication link according to an embodiment of this application;
FIG. 5 is a diagram in which a first time period and a second time period occupy different slots according to an embodiment of this application;
FIG. 6 is another diagram in which a first time period and a second time period occupy different slots according to an embodiment of this application;
FIG. 7 is a diagram of slots in different frame structures occupied by a first time period and a second time period according to an embodiment of this application;
FIG. 8 is a diagram in which indication information indicates slots occupied by a second time period according to an embodiment of this application;
FIG. 9 is another diagram in which indication information indicates slots occupied by a second time period according to an embodiment of this application;
FIG. 10 is still another diagram in which indication information indicates slots occupied by a second time period according to an embodiment of this application;
FIG. 11 is a diagram of a data padding manner according to an embodiment of this application;
FIG. 12 is a diagram of an information truncation manner according to an embodiment of this application;
FIG. 13 is a schematic flowchart of another method for waking up a communication link according to an embodiment of this application;

FIG. 14 is a diagram of a structure of an apparatus 1400 for waking up a communication link according to an embodiment of this application;

FIG. 15 is a diagram of a structure of an apparatus 1500 for waking up a communication link according to an embodiment of this application; and

FIG. 16 is a diagram of a structure of a device according to an embodiment of this application.

## DESCRIPTION OF EMBODIMENTS

The following describes technical solutions of embodiments in this application with reference to accompanying drawings.

Before a method for waking up a communication link provided in this application is described, an application scenario, a wireless communication system, a network device, a terminal device, and the like to which this application is applicable are first briefly described.

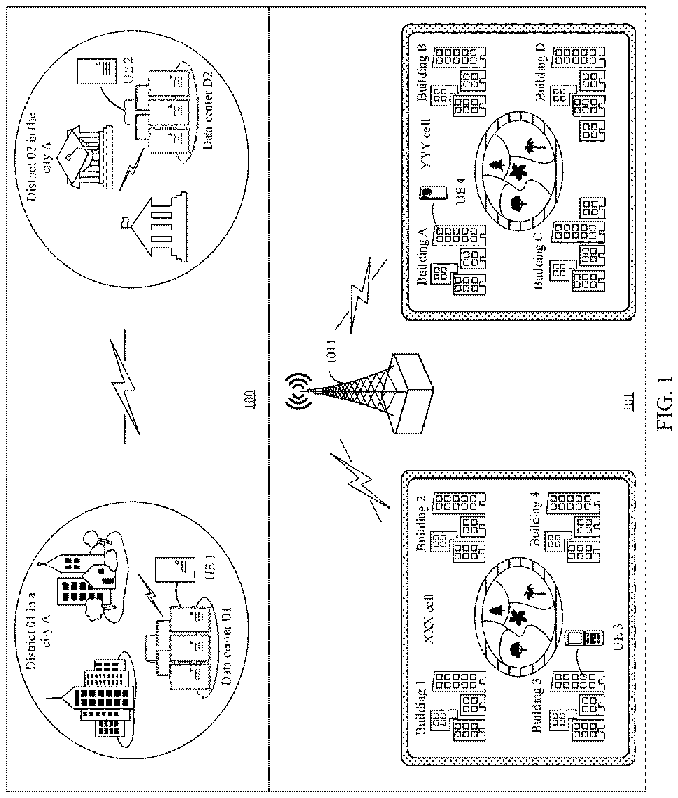

FIG. 1 shows an application scenario to which this application is applicable. The application scenario includes but is not limited to a sidelink scenario 100 and a cellular communication scenario 101. In the sidelink scenario 100, a plurality of terminal devices communicate with each other through a wireless communication link. For example, a first device and a second device are two terminal devices in the plurality of terminal devices, and the two terminal devices are a user equipment (user equipment, UE) 1 of a data center D1 and a UE 2 of a data center D2 respectively. The UE 1 and the UE 2 transmit service data through the wireless communication link. However, in the cellular communication scenario 101, a network device and a terminal device communicate with each other through a wireless communication link. For example, the network device is a base station 1011, two terminal devices are a UE 3 in a cell XXX and a UE 4 in a cell YYY respectively, and the network device performs data transmission with the UE 3 and the UE 4 through the wireless communication link.

The cellular communication scenario 101 is used as an example. A first device is the UE 3, a second device is the base station 1011, the UE 3 in the cell XXX is a mobile phone of a user A, and the UE 4 in the cell YYY is a mobile phone of a user B. If the UE 3 enters an idle mode (namely, a sleep state) in a time period A, a main link (namely, a second link) of the UE 3 enters a sleep state, and a wake-up link (namely, a first link) is enabled. If the user B makes a call to the user A, the base station 1011 sends, to the UE 3, information about calling the UE 3 by the UE 4. However, the main link of the UE 3 is in a sleep state. In this case, the base station 1011 sends wake-up information to the UE 3. The UE 3 receives the wake-up information through the wake-up link. If the UE 3 receives the wake-up information for the UE 3, the UE 3 wakes up the main link of the UE 3. After the main link of the UE 3 is woken up and an on state is entered, the UE 3 enters a connected mode by using a procedure like random access. Then, the base station 1011 sends the information about calling the UE 3 by the UE 4 to the main link of the UE 3. After receiving the call information, the main link of the UE 3 performs data transmission (for example, voice data transmission and video data transmission) with the UE 4.

A wireless communication system applicable to the foregoing application scenario may be a 4th generation (4th Generation, 4G) mobile communication system, a 5th generation (5th Generation, 5G) mobile communication system, another mobile communication system that may appear in the future, or the like.

The wireless communication system includes one or more network devices and one or more terminal devices. The first device may be a network device or a terminal device, and the second device may be a network device or a terminal device. This is not limited in this application. The network device may also be referred to as a radio access network (radio access network, RAN) or a radio access network device. The network device may be a transmission reception point (transmission reception point, TRP), or may be an evolved NodeB (evolved NodeB, eNB, or eNodeB) in the 4G mobile communication system, or may be a base station in the 5G mobile communication system, a base station in a future mobile communication system, or the like. This is not limited in this application.

Terminal devices may be distributed across an entire wireless communication system, and may be stationary or mobile.

In some embodiments of this application, the terminal device may be a mobile device, a mobile station (mobile station), a mobile unit (mobile unit), a machine to machine (Machine to Machine, M2M) terminal, a wireless unit, a remote unit, a user agent, a mobile client, a UE, or the like. For example, the terminal device is a UE, and the UE includes but is not limited to a mobile phone, a vehicle, a tablet computer, a smart sound box, and a train detector.

It should be understood that the application scenarios shown in FIG. 1 are merely used to clearly describe the technical solutions of this application, and do not constitute any limitation on this application. A person of ordinary skill in the art may learn that, with evolution of network architectures and emergence of new service scenarios, the technical solutions provided in embodiments of this application are also applicable to a similar technical problem.

Embodiments of this application relate to a network-side communication apparatus. The network-side communication apparatus may be a network device, or may be a chip or a system-on-a-chip disposed inside a network side. For ease of understanding and description, that the network-side communications apparatus is a network device is used as an example for description below.

Embodiments of this application further relate to a terminal-side communication apparatus. The terminal-side communication apparatus may be a terminal device, or may be a chip or a system on chip disposed in a terminal device. For ease of understanding and description, that the terminal-side communications apparatus is a terminal device is used as an example for description below.

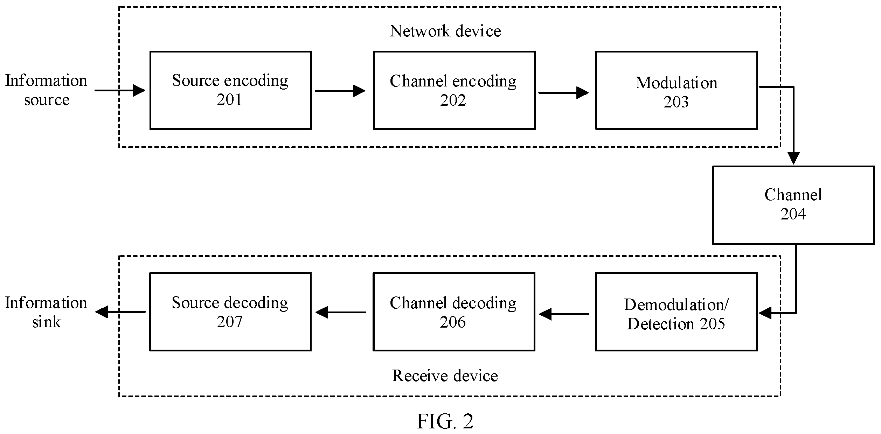

The following briefly describes main functional modules in a communication system (for example, a wireless communication system) with reference to FIG. 2. Herein, an example in which the first device is a terminal device (namely, a receive device), the second device is a network device, and the network device sends wake-up information to the terminal device is used for description.

FIG. 2 shows a typical structure of a communication system. In the communication system, a network device first performs source encoding (source encoding) 201 on an information source (information source) (for example, wake-up information). A main function of the source encoding 201 is to compress the wake-up information, to reduce an amount of data that needs to be transmitted. Then, the network device performs channel encoding (channel encoding) 202 on a result of the source encoding. The channel encoding 202 introduces some redundant information, to improve an anti-interference capability of transmission. In this way, even if some errors occur in an information transmission process, the errors can be corrected at a receive end. After the channel encoding 202 ends, the network device modulates (modulates) 203 a result of the channel encoding. A modulation module modulates, based on an output of the channel encoding, an attribute, like an amplitude, a frequency, or a phase, of a physical medium (for example, an electromagnetic wave, an electrical signal, or a laser) used for transmission, and performs sending through a channel 204. After receiving a signal that is sent by the network device and that is modulated on the physical medium, a receive device demodulates (demodulates) or detects 205 the received signal to obtain a demodulation result. The receive device sequentially performs channel decoding (channel decoding) 206 and source decoding (source decoding) 207 on the demodulation result, restores source information (for example, wake-up information) sent by the network device, and sends the source information (for example, the wake-up information) sent by the network device to an information sink (information sink).

In a channel encoding process, an encoder encodes an input information sequence (generally a 0/1 bit sequence) to obtain an encoded information sequence. Generally, a length of the encoded information sequence is greater than a length of the information sequence before encoding. For example, an information sequence x=[0100] is input to an encoder G1, and a length of the information sequence x is 4 bits. After the information sequence x passes through the encoder G1, an encoded sequence y=[0100011] is obtained, and a length of the encoded sequence y is 7 bits, where first 4 bits of the sequence y are the information sequence x (namely, 0100), and last 3 bits of the sequence y are check information (namely, 011) added by the encoder G1. The check information makes the length of the output sequence y of the encoder G1 greater than the length of the input information sequence x.

In an information transmission process, a signal experiences non-ideal factors such as noise interference and channel attenuation, and therefore there is a specific error probability during data transmission. If channel encoding and decoding are not performed, the receive device cannot restore correct data. Therefore, before sending data (for example, a first part of the wake-up information), the network device performs channel encoding on the to-be-sent data, so that the receive device can correct an incorrectly transmitted part of the to-be-sent data. For example, after the sequence y=[0 1 0 0 0 1 1] is modulated and sent, interference such as intra-channel noise occurs. After demodulating the sequence y, the receive device detects that an error occurs in transmission of a fourth bit of the sequence y, namely, a demodulated sequence is y=[0 1 0 1 0 1 1]. Because the sequence y is a sequence obtained after channel encoding is performed on the information sequence x, the receive device may correctly decode the sequence x based on the last three bits (namely, the check information) of the sequence y. In other words, the receive device obtains the information sequence x=[0100] after decoding based on the demodulated sequence y=[0 1 0 1 0 1 1], instead of x=[0101]. It can be learned that channel encoding is performed on a to-be-sent information sequence (for example, the first part or a second part of the wake-up information), to obtain an information sequence including the check information. Sending the information sequence including the check information can improve a capability of resisting a transmission error in a data transmission process.

Currently, there are many channel encoding technologies. For example, in a 5G communication system, a low density parity check code (Low Density Parity Check Code, LDPC), a polar code (Polar Code), and the like may be used, and in a 4G communication system, a turbo code, a convolutional code, and the like may be used. All the foregoing encoding technologies can provide a very high coding gain (coding gain). In addition, there are some simpler channel encoding technologies, such as a BCH code (Bose-Chaudhuri Hocquenghem code) and an RS code (Reed Solomon code). A channel encoding manner is not limited in this application.

The foregoing briefly describes the application scenario, the wireless communication system, and an architecture of the communication system that are applicable to this application. The following describes a method for waking up a communication link provided in this application by using a first device as a terminal device (namely, a receive device) and a second device as a network device.

In a communication scenario, when waking up a terminal device (namely, a first device), the network device (namely, the second device) sends wake-up information to the terminal device, where the wake-up information indicates a specific terminal device that is to be woken up. Because time at which the network device sends the wake-up information cannot be determined in advance, the terminal device needs to continuously monitor, through a wake-up link, each piece of wake-up information sent by the network device, and decode each piece of wake-up information, to determine whether the wake-up information is information sent to the terminal device. Because the terminal device (namely, the receive device) continuously monitors and decodes each piece of wake-up information through the wake-up link, large power consumption is caused. For this technical problem, this application provides a method for waking up a communication link.

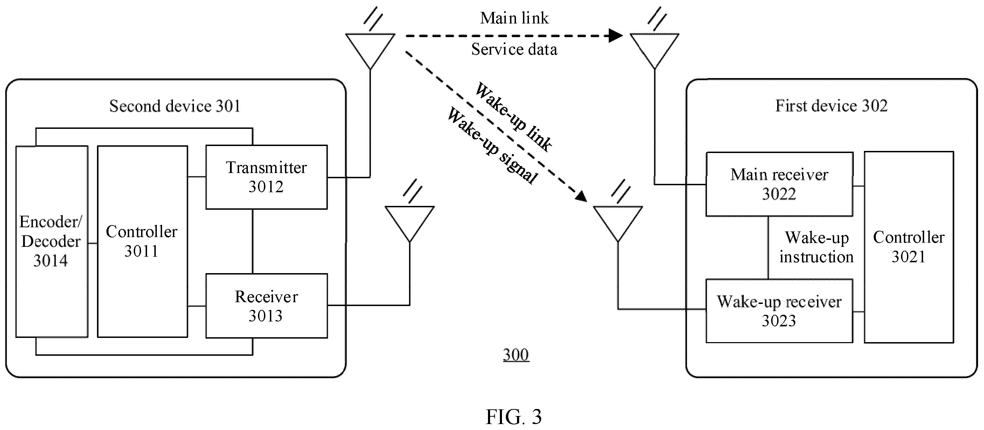

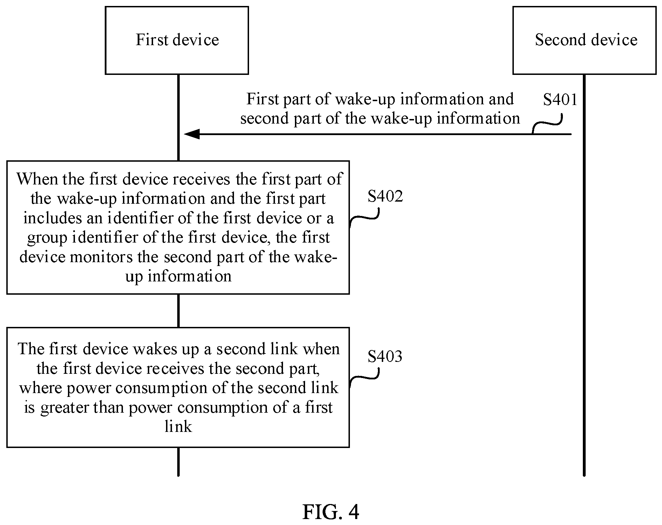

Before the method for waking up the communication link provided in this application is described with reference to FIG. 4, structures of a second device 301 and a first device 302 that are used in this application and a working principle of information exchange between the second device 301 and the first device 302 are first described with reference to a communication architecture 300 shown in FIG. 3.

The second device 301 is a network device, the first device 302 is a terminal device (namely, a receive device), and the communication architecture 300 between the second device 301 and the first device 302 is shown in FIG. 3. The communication architecture 300 includes the second device 301 and the first device 302. The second device 301 includes a controller 3011, a transmitter 3012, a receiver 3013, and an encoder/decoder 3014. The controller 3011 is configured to control coordination between the transmitter 3012, the receiver 3013, and the encoder/decoder 3014. The encoder/decoder 3014 is configured to encode and decode wake-up information. The transmitter 3012 is configured to send modulated encoded data. For example, the transmitter 3012 performs signal modulation on encoded data output by the encoder/decoder 3014, and sends a modulated signal. The receiver 3013 is configured to receive data (for example, feedback data and service data) sent by another device.

The first device 302 includes a controller 3021, a main receiver 3022, and a wake-up receiver 3023. The controller 3021 is configured to control coordination between the main receiver 3022 and the wake-up receiver 3023. The main receiver 3022 is configured to receive control signaling and service data (for example, video data, voice data, and text data) that are sent by the second device 301 through a main link. The wake-up receiver 3023 is configured to: receive a wake-up signal sent by the second device 301 through a wake-up link, and demodulate and decode the wake-up signal, where the wake-up signal carries wake-up information encoded by the second device 301 by using the encoder/decoder 3014, and the wake-up information is used by the wake-up receiver 3023 to wake up the main receiver 3022 from a sleep state to an on state. The wake-up receiver 3023 demodulates and decodes the wake-up signal to obtain the wake-up information. The wake-up receiver 3023 generates a wake-up instruction based on the wake-up information, and sends the wake-up instruction to the main receiver 3022. The main receiver 3022 switches from the sleep state to the on state according to the wake-up instruction, and starts to make the first device 302 enter a connected mode through a procedure like random access, to receive the service data sent by the second device 301 through the main link. Certainly, in some embodiments, the first device 302 may further include a transmitter. This is not limited in this application.

After the working principle of information exchange between the second device 301 and the first device 302 is described, the following specifically describes the method for waking up the communication link with reference to FIG. 4. The method includes the following steps.

S401: A second device sends a first part of wake-up information through a first link, where the first part includes identifier information, and the first part indicates a target device corresponding to the identifier information to monitor a second part of the wake-up information; the second device sends the second part of the wake-up information, where the second part is used to wake up a second link of the target device; and a first device monitors the first part of the wake-up information through the first link.

In different application scenarios, device types of the second device are different. For example, in the sidelink scenario 100, the second device may be a terminal device, and the first device may also be a terminal device. In the cellular communication scenario 101, the second device may be a network device (for example, the base station 1011), and the first device may be a terminal device (for example, a mobile phone). Certainly, in some scenarios, both the first device and the second device are network devices. The target device is the first device.

In an embodiment, the first link is a wake-up link, and the wake-up link is used by the second device to send the first part (and/or the second part) of the wake-up information, and is further used by the first device to monitor the first part (and/or the second part) of the wake-up information. The second link is a main link, and the main link is used by the second device to send control signaling and service data, and is further used by the first device to receive the control signaling and the service data, where the service data includes but is not limited to video data, audio data, text data, and other data.

The identifier information is an identifier (Identifier, ID) of the first device, a part of an identifier (ID) of the first device, or a group identifier of the first device. The identifier information indicates the first device (namely, a terminal device) that needs to be woken up or a terminal group in which the first device that needs to be woken up is located. For example, the identifier information is an ID of the first device. The second device may configure an ID for the first device in advance, and the ID is a fixed-length sequence. For example, the ID is a 48-bit binary sequence. The second device sends the ID as the first part of the wake-up information to the first device through the first link. When the first device detects the ID on the first link (for example, the wake-up link) and detects that the ID is the ID of the first device, the first device monitors the second part of the wake-up information.

For another example, the identifier information is a part of an ID of the first device. The second device may configure an ID for the first device in advance, and the ID is a fixed-length sequence. For example, the ID is a 48-bit binary sequence. The second device sends first 5 bits of the ID (namely, the part of the ID of the first device) as the first part of the wake-up information to the first device through the first link. When the first device detects the first 5 bits of the ID on the first link (for example, the wake-up link) and detects that the first five bits of the ID are the same as a part corresponding to the ID of the first device, the first device monitors the second part of the wake-up information.

For another example, the identifier information is a group identifier of the first device. The second device may configure a group identifier for the first device in advance, to identify a terminal group to which the first device belongs. The group identifier is a fixed-length sequence. For example, the group identifier is a 5-bit binary sequence. The second device sends the group identifier as the first part of the wake-up information to the first device through the first link. When the first device detects the group identifier on the first link (for example, the wake-up link) and detects that the group identifier is the group identifier of the first device, the first device monitors the second part of the wake-up information.

In an embodiment, the second device divides the wake-up information into two parts: a first part and a second part. The first part includes identifier information, the identifier information is a group identifier, and the second part includes but is not limited to a number in a group of the first device and a paging identifier (Paging ID) of the first device or an ID of the first device. The group identifier is used to identify a terminal group to which the first device belongs. The number in the group of the first device, the paging identifier (Paging ID) of the first device, or the ID of the first device indicates a terminal device or terminal devices are to be woken up. The second device groups a plurality of terminals in advance, and each terminal knows a number of a terminal group to which the terminal belongs. For example, a plurality of UEs in a cell A may be divided into 32 groups, group numbers are 0 to 31, and 5 bits may be used to represent a number of each group. After grouping the plurality of UEs in the cell A, the second device may notify, by using signaling or indication information, a terminal group to which each UE belongs, or the second device determines, based on an ID (for example, a TMSI) of each user, a terminal group to which each user belongs.

In another embodiment, the first part includes a group identifier, and the second part includes a paging identifier.

For example, the second device wants to wake up the first device by using the wake-up information. The second device divides the wake-up information into three parts: a first part, a second part, and a third part. The first part includes a group identifier A, and the group identifier A is an identifier of a terminal group (namely, a group) to which the first device belongs. The second part includes a part S1 of a paging identifier B, and is used to determine a device (for example, the first device) that needs to be woken up in the terminal group. The paging identifier B is an identifier for waking up the first device, and the third part includes a part S2 of the paging identifier B other than S1, and is used to wake up a second link (namely, a main link) of the first device. The second device sends the first part including the group identifier A to the first device, and the first device decodes the first part. If the first radio part device determines, based on a decoding result of the first part, that the group identifier A is the identifier of the group to which the first device belongs, the first device monitors the second part sent by the second device. If the first device determines, based on a decoding result of the second part, that S1 is used to wake up the first device, the first device continues to monitor the third part of the wake-up information. When receiving S2, the first device wakes up the second link of the first device.

Optionally, the second device sends the first part including the group identifier A to the first device in a first time period, and sends the second part of the wake-up information to the first device in a second time period, where the second part includes a number in a group, a paging identifier, or an ID of the first device. The first device monitors the first part of the wake-up information in the first time period, and decodes the first part. If the first device determines, after decoding, that the group identifier A is an identifier of a group to which the first device belongs, the first device monitors the second part in the second time period, and decodes the second part. When the first device determines, based on a decoding result of the second part, that the number in the group, the paging identifier, or the ID of the first device is an identifier for waking up the first device, the first device wakes up the second link (namely, a main link) of the first device.

Compared with that in the conventional technology, the second device determines, by sending the group identifier, a group in which a device that needs to be woken up is located, and sends the second part (namely, the paging identifier) to the group in which the device is located, and another group (namely, a group other than the group in which the device is located) does not need to receive the second part. Correspondingly, in the conventional technology, a device is woken up by using complete wake-up information, and the device needs to decode the complete wake-up information before determining whether the wake-up information is wake-up information for the device. In this embodiment, the first device first determines, based on a received group identifier, whether the received wake-up information is wake-up information of a group to which the first device belongs, and if the received wake-up information is the wake-up information of the first device, the second part (namely, the paging identifier) of the wake-up information continues to be received, without decoding the complete wake-up information. This reduces power consumption of the wake-up link of the first device.

In an embodiment, the second device divides the wake-up information into two parts: a first part and a second part. The first part includes identifier information, and the identifier information is a part X of a paging identifier (Paging ID) of the first device or a part Y of an ID of the first device. The second part includes but is not limited to a remaining part of the paging identifier other than the part X of the paging identifier or a remaining part of the ID of the first device other than the part Y of the ID.

Optionally, the second device sends the first part of the wake-up information to the first device in a first time period, and sends the second part of the wake-up information to the first device in a second time period. The first device monitors the first part of the wake-up information in the first time period, and decodes the first part. If the first device determines, after decoding, that the received information is the same as a paging identifier of the first device or a corresponding part of an ID of the first device, the first device monitors the second part in the second time period, and decodes the second part. When the first device determines, based on a decoding result of the second part, that the received information is the same as the paging identifier of the first device or the corresponding part of the ID of the first device, the first device wakes up a second link (namely, a main link) of the first device.

In the conventional technology, a device is woken up by using complete wake-up information, and the device needs to decode the complete wake-up information before determining whether the wake-up information is wake-up information for the device. In this embodiment, the first device first determines, based on the first part of the received wake-up information, whether the first part of the received wake-up information is the same as the paging identifier of the first device or the corresponding part of the ID of the first device; and if the first part of the received wake-up information is the same as the paging identifier of the first device or the corresponding part of the ID of the first device, the first device continues to receive the second part of the wake-up information. Otherwise, the complete wake-up information does not need to be decoded. This reduces power consumption of the wake-up link of the first device.

In another embodiment, one piece of wake-up information may have the following structure: an access and mobility management function (Access and Mobility Management Function, AMF) set identifier (Set Identifier), an AMF pointer, and a 5G temporary mobile subscriber identity (Temporary Mobile Subscriber Identity, TMSI). The wake-up information is usually represented by using a quantity of fixed-length bits. For example, in a 5G system, one piece of paging information (namely, wake-up information) is 48 bits, where an AMF set identifier is 10 bits, an AMF pointer is 6 bits, and a 5G-TMSI is 32 bits. The second device divides the wake-up information into a first part of the wake-up information and a second part of the wake-up information. The first part includes all or a part of information of a temporary mobile subscriber identity (namely, a TMSI), and the second part is a remaining part of information of the wake-up information other than the first part. For example, in a 5G system, the TMSI is a 01010100000001000010010100011111. Usually, N rightmost bits (for example, N=5) of the TMSI are referred to as least significant bits (Least significant bits), where N is a positive integer. The second device may select N=5 bits from the rightmost part of the TMSI as the first part, or may select 6 bits from the middle of the TMSI as the first part, or may use an entire information about the TMSI as the first part. A specific part of the TMSI that is selected as the first part is not limited in this application.

The other two parts (namely, the AMF set identifier and the AMF pointer) of the wake-up information are common information of a plurality of terminals. If the first part is selected from the two parts, after the first part is received, the first part is the same as the first parts of the plurality of terminals (for example, a plurality of UEs). Therefore, the second part continues to be monitored. This increases power consumption of the plurality of terminals. However, a TMSI of each terminal (for example, a UE) is independently configured. In a specific network range, for example, in a paging area (tracking area), each terminal has a different TMSI. Therefore, the second device uses all information of a temporary mobile subscriber identity as the first part, so that a probability that the plurality of terminals continue to monitor the second part because the first part of information is the same for the plurality of terminals can be avoided, and a "false alarm" can be avoided. In addition, the second device selects a part of information from the temporary mobile subscriber identity as the first part of the wake-up information, so that the probability that the plurality of terminals continue to monitor the second part because the first part of information is the same for the plurality of terminals can be reduced.

After dividing the wake-up information into a plurality of parts (namely, at least two parts), the second device performs channel encoding on the plurality of parts. When encoding the parts, the second device may use a same forward error correction code (Forward error correction code, FEC), or may use different forward error correction codes.

For example, the second device uses different forward error correction codes based on information in the first part and information in the second part. An information length of the first part is short, and a forward error correction code suitable for generating a short code may be selected. However, an information length of the second part is greater than that of the first part. Therefore, the second part may use a forward error correction code of a long code, to ensure reliability of decoding the second part by a receive device (for example, the first device). For example, the first part is encoded by a BCH code encoder, and the second part is encoded by a polar code encoder.

In addition, when encoding the plurality of parts, the second device may use a same forward error correction code, and use encoders of a same length (the length and a size herein refer to a size of a code block obtained after an encoder encodes the code block, for example, each part uses a small-size encoder of a same length). Alternatively, encoders of different lengths may be used (for example, a small-size encoder A is used for the first part, and a large-size encoder B is used for the second part). The small-size encoder can reduce decoding power consumption of the receive device, and the large-size encoder can improve an encoding gain. During actual application, an appropriate-size encoder may be selected based on a specific application scenario.

In an embodiment, a length of an encoder corresponding to the second part is greater than a length of an encoder corresponding to the first part. That is, a length of an encoded code block generated by an encoder used by the second device to encode the second part is greater than a length of an encoded code block generated by an encoder used by the second device to encode the first part. Correspondingly, a length of a decoder corresponding to the second part is greater than a length of a decoder corresponding to the first part, that is, a length of a code block input by a decoder used when the first device decodes the second part is greater than a length of a code block input by a decoder used when the first device decodes the first part.

For example, when the second device divides the wake-up information into the first part and the second part, a length (namely, a quantity of bits) of the second part is greater than a length (namely, a quantity of bits) of the first part. When encoding the first part, the second device uses a forward error correction code suitable for generating a short code (that is, uses a short encoder), for example, selects a BCH code encoder. When encoding the second part, the second device selects a forward error correction code suitable for generating a long code (that is, uses a long encoder), for example, a Turbo code encoder and a convolutional code encoder. Correspondingly, for example, the second device sends, to the first device, a coding parameter used when the first part and the second part are encoded, and the first device separately decodes the first part and the second part based on the coding parameter. If the first device determines, based on the encoder parameter, that the first part is decoded by a BCH code decoder, and the second part is decoded by a convolutional code decoder, the first device decodes the received first part by using the BCH code decoder, and decodes the received second part by using the convolutional code decoder. Because complexity of the BCH code decoder is less than complexity of the convolutional code decoder, the first device decodes the first part by using the BCH code decoder, so that decoding power consumption can be reduced, and decodes the second part by using the convolutional code decoder, so that decoding reliability can be improved.

In this embodiment, compared with that in a solution in which the second device encodes complete wake-up information by using a long encoder in the conventional technology, in this embodiment, the second device encodes the first part and the second part by using encoders of different lengths (namely, encoders of different complexity). For example, an information length of the first part is short, and the second device encodes the first part by using a forward error correction code suitable for generating a short code, to reduce encoding power consumption. An information length of the second part is long, and the second device encodes the second part by using a forward error correction code suitable for generating a long code, to ensure encoding reliability. It can be learned that the second device uses different encoders for different parts of the wake-up information, so that not only encoding power consumption can be reduced, but also encoding reliability can be ensured. Correspondingly, compared with that in the conventional technology in which the first device uses a long decoder (namely, a complex decoder) to decode complete wake-up information, in this embodiment, the first device decodes the first part and the second part by using decoders of different lengths (namely, decoders of different complexity). For example, an information length of the first part is short, and the first device decodes the first part by using a short decoder (a low-complexity decoder), to reduce decoding power consumption. An information length of the second part is long, and the first device decodes the second part by using a long decoder (a high-complexity decoder), to ensure decoding reliability. It can be learned that the first device uses different decoders for different parts of the wake-up information, so that not only decoding power consumption can be reduced, but also decoding reliability can be ensured.

In another embodiment, the second device divides the wake-up information into a plurality of parts (namely, at least two parts), and encodes the at least two parts of the wake-up information by respectively using at least two encoders (for example, BCH code encoders) shorter than an encoder in the solution in the conventional technology. Correspondingly, the first device decodes the at least two parts of the wake-up information by respectively using at least two decoders (namely, short decoders) shorter than a decoder in the solution in the conventional technology. However, power consumption of performing decoding by at least two short decoders is less than power consumption of performing decoding by a long decoder in the conventional technology. Therefore, power consumption of the wake-up link of the first device can be further reduced.

In an embodiment, in addition to sending the plurality of parts of the wake-up information to the first device, the second device further sends an encoder parameter to the first device. For example, the second device sends the encoder parameter to the first device through a first link (for example, a wake-up link) or a second link (for example, a main link). The encoder parameter includes a bit rate of channel encoding and an encoder type, the bit rate of channel encoding includes a quantity k of input bits, a quantity n of encoded bits, and a quantity t of bits of a correctable error, and the encoder type includes but is not limited to a BCH code and an RS code. For example, a bit rate that is of channel encoding and that is used when the second device encodes the first part is (n, k, t)=(15, 5, 3), and an encoder type used when the second device encodes the first part is a BCH code; and a bit rate that is of channel encoding and that is used when the second device encodes the second part is (n, k, t)=(127, 43, 14), and an encoder type used when the second device encodes the second part is a polar code.

In another embodiment, the second device and the first device predefine the encoder parameter according to a communication protocol. For example, the encoder parameter used by the second device is predefined according to the communication protocol as follows: A bit rate that is of channel encoding and that is used by the second device to encode the first part is (n, k, t)=(15, 5, 3), and an encoder type used by the second device to encode the first part is a BCH code; and a bit rate that is of channel encoding and that is used by the second device to encode the second part is (n, k, t)=(127, 43, 14), and an encoder type used by the second device to encode the second part is a polar code.

After encoding the plurality of parts of the wake-up information, the second device sends, based on a specific frame structure, a sequence obtained after the plurality of parts are encoded. For example, the second device sends a plurality of partially encoded sequences to the first device over the first link (for example, a wake-up link).

The second device divides a time domain resource of the first link (for example, the wake-up link) into a plurality of frames in terms of time. Each frame is divided into a plurality of time intervals (time interval), and different time intervals are used to carry different parts of the wake-up information. The second device divides each time interval into a plurality of slots (slot) based on frame structure information. The first part of the wake-up information is sent by using one or more slots in a first time interval. The second part of the wake-up information is sent by using one or more slots in a second time interval. The first time interval is one of a plurality of time intervals in one frame, the second time interval is one of a plurality of time intervals in one frame, and the first time interval and the second time interval may be the same or different.

In an embodiment, that the second device sends the second part of the wake-up information includes: The second device sends the second part in a second time period, where there is an association relationship between the second time period and a first time period, and the first time period is a time period in which the second device sends the first part of the wake-up information. That the first device monitors the second part of the wake-up information includes: The first device monitors the second part of the wake-up information in a second time period, where there is an association relationship between the second time period and a first time period, and the first time period is a time period in which the first part of the wake-up information is received.

The association relationship between the second time period and the first time period (namely, an association mapping relationship between the first time period and the second time period) means that the second time period may be determined based on the first time period and a first formula.

The first time period is a time location (for example, a number of a used slot) used when the second device sends the first part of the wake-up information. For example, the first time period is a third slot (namely, a slot 3) in a first time interval of a frame X1. The second time period is a time location (for example, a number of a used slot) used when the second device sends the second part of the wake-up information. For example, the second time period is a third slot (namely, a slot 3) in a second time interval of a frame X2. The frame X1 and the frame X2 may be a same frame, or may be different frames.

The association mapping relationship between the first time period and the second time period may be predefined by using a communication protocol. For example, a slot sequence number s1 used in the first time period is predefined by using a communication protocol, and a slot sequence number s2 used in the second time period may be determined by using a formula (1). The formula (1) is as follows:

$$s2=f(s1)=a \cdot s1+b \ (1)$$

In the formula, f represents a mapping function, and a and b are real numbers specified in the protocol.

For example, the second device divides the wake-up information into a first part and a second part, where the first part is encoded to obtain a first code block, and the second part is encoded to obtain a second code block. An association mapping relationship between sending slots of the first part and the second part is predefined as s2=s1 in the communication protocol, that is, a=1, and b=0. The second device sends the first code block to the first device by using a third slot in a first time interval of a frame A (that is, a slot sequence number s1 used in the first time period is a slot 3), and sends the second code block to the first device by using a third slot in a second time interval of the frame A (that is, a slot sequence number s2 used in the second time period is a slot 3). Correspondingly, the first device monitors the first part of the wake-up information in each slot in the first time interval of the frame A. If the first device detects, through monitoring in the third slot in the first time interval of the frame A, that the first part (for example, an ID of the first device) of the wake-up information can match the ID of the first device, in this case, the first device determines, based on the slot sequence number s1 (namely, a slot 3) used for sending the first part and the association mapping relationship between the sending slots of the first part and the second part of the wake-up information, to monitor the second part in the slot sequence number s2 (namely, a slot 3) in the second time interval of the frame A. When receiving the second part, the first device wakes up a second link.

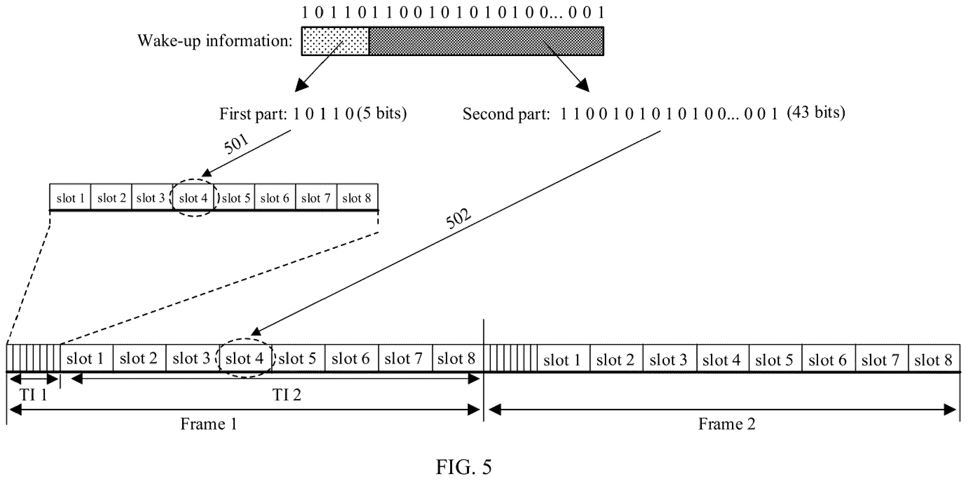

The following describes an association mapping relationship between the first time period and the second time period with reference to FIG. 5. As shown in FIG. 5, the first device is a UE, a length of wake-up information sent by the second device to the UE is 48 bits, and the wake-up information is 101101100 101010100... 001. The second device divides the wake-up information into two parts and sends the two parts, where a length of the first part is 5 bits. For example, first 5 bits (namely, 10110) of the wake-up information are used as the first part for sending, and the remaining 43 bits (namely, 1100 101010100... 001) are used as the second part. The second device encodes the first part by using a BCH code encoder, to obtain a first code block R1 (n, k, t)=(15, 5, 3), and the second device encodes the second part by using the BCH code encoder, to obtain a second code block R2 (n, k, t)=(127, 43, 14). After the second device separately encodes the first part and the second part, a length (15 bits) of the first code block is less than a length (127 bits) of the second code block.

The second device divides a time domain resource of the first link (for example, the wake-up link) into consecutive frames (frames), where each frame is divided into a plurality of time intervals, and each time interval is divided into a plurality of slots. For example, FIG. 5 shows frame structures of two frames: Frame 1 and Frame 2. Each of the two frames is divided into two time intervals: a time interval TI 1 and a time interval TI 2. TI 1 and TI 2 each are divided into eight slots: a slot 1, a slot 2, ..., and a slot 8, and a length of each slot in TI 1 is shorter than a length of each slot in TI 2.

It is predefined in a communication protocol that an association mapping relationship between the first time period and the second time period is that slot sequence numbers of the first time period and the second time period are the same (that is, s2=s1). For example, the first part and the second part are sent in same Frame 1. The first part is sent in a $s1^{th}$ slot in TI 1 of Frame 1, and the second part is sent in a $s2^{th}$ slot in TI 2 of Frame 1. For example, the first time period is a fourth (that is, s1=4) slot (namely, a slot 4) in TI 1 of Frame 1 as shown in 501 in FIG. 5, and the second time period is a fourth (that is, s2=4) slot (namely, a slot 4) in TI 2 of Frame 1 as shown in 502 in FIG. 5. It can be learned from the predefinition that a slot used by the second device to send the first part to a UE is the fourth slot (namely, a slot 4) in TI 1 of Frame 1, that is, the second device sends the first code block R1 to the UE in the fourth slot (namely, a slot 4) in TI 1 of Frame 1, and a slot used for sending the second part to the UE is the fourth slot (namely, a slot 4) in TI 2 of Frame 1, that is, the second device sends the second code block R2 to the UE in the fourth slot (namely, a slot 4) in TI 2 of Frame 1.

For a UE (namely, the first device) end, the UE first monitors information in each slot in TI 1 of Frame 1, that is, the UE receives and decodes the information in each slot in TI 1 of Frame 1. The UE decodes information in each slot by using a corresponding BCH code decoder based on the BCH code encoder used by the second device. Because the first code block R1 in the first part is small, power consumption of the UE during decoding is low. The UE decodes information in eight slots in TI 1 of Frame 1 (TI 1 is divided into eight slots) eight times by using the BCH code decoder. In a normal case, the UE decodes the first part of the wake-up information in a fourth slot (namely, a slot 4) in TI 1 of Frame 1. It is detected that the first part (namely, 10110) of the wake-up information is the same as first five bits of an ID of the UE (namely, the UE).

If the UE detects, in the slot 4 in TI 1 of Frame 1, that the first part matches the ID of the UE, the UE determines, based on a decoded slot sequence number of the first part and a predefined association mapping relationship between a first time period and a second time period, that the UE (namely, the UE) receives the second code block R2 in the slot 4 in TI 2 of Frame 1, and decodes the second code block R2. Based on the associated mapping relationship between the first time period and the second time period, the UE decodes the second code block R2 only once in the slot 4 in TI 2 of Frame 1, and does not need to receive and decode information in a slot other than the slot 4 in TI 2 of Frame 1. Therefore, use time of the decoder is reduced, and power consumption of the UE is further reduced.

The first time period refers to a time location used by the second device when the second device sends the first part of the wake-up information, and the first time period includes a number of a frame used by the second device and a number of a slot used by the second device. The second time period refers to a time location used by the second device when the second device sends the second part of the wake-up information, and the second time period includes a number of a frame used by the second device and a number of a slot used by the second device. The association mapping relationship between the first time period and the second time period is defined as m2=$f_1$ (m1) and s2=$f_2$ (s1) in the communication protocol, where m1 is a number of a frame in which the first part of the wake-up information is sent, m2 is a number of a frame in which the second part of the wake-up information is sent, $f_1$ is a mapping function, s1 is a number of a slot used for sending the first part of the wake-up information, s2 is a number of a slot used for sending the second part of the wake-up information, and $f_2$ is a mapping function.

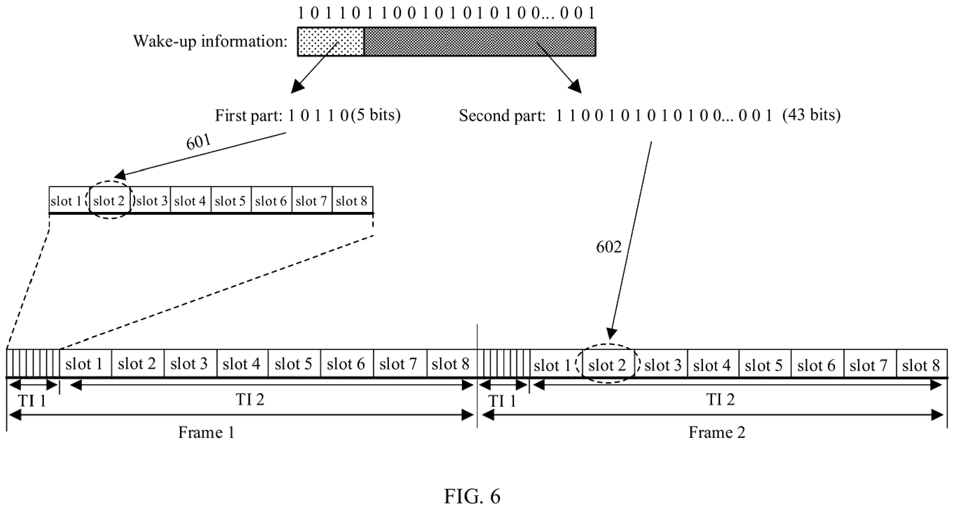

For example, as shown in FIG. 6, the association mapping relationship between the first time period and the second time period is predefined as m2=m1+1 and s2=s1 according to the communication protocol. If the first part of the wake-up information is sent in a slot 2 (that is, s1=2) in TI 1 of Frame 1 (that is, m1=1), and the second part is sent in a slot 2 (that is, s2=2) in TI 2 of Frame 2 (that is, m2=m1+1=1+1=2), that is, slot sequence numbers used for sending the first part and the second part are the same (that is, s2=s1), Frame 1 and Frame 2 are two adjacent frames. Frame 1 indicates that a number m1 of a frame used by the second device to send the first part of the wake-up information is 1. Frame 2 indicates that a number m2 of a frame used by the second device to send the second part of the wake-up information is 2. It can be learned from the predefinition that the first time period is a second (that is, s1=2) slot (namely, a slot 2) in TI 1 of Frame 1, as shown in 601 in FIG. 6. The second time period is a second (that is, s2=2) slot (namely, a slot 2) in TI 2 of Frame 2, as shown in 602 in FIG. 6. Based on the predefined association mapping relationship between the first time period and the second time period, the second device sends the first code block R1 in the slot 2 in TI 1 of Frame 1 (namely, the first time period), and sends the second code block R2 in the slot 2 in TI 2 of Frame 2 (namely, the second time period).

For a UE (namely, the first device) end, the UE first monitors information in each slot in TI 1 of Frame 1, that is, the UE receives and decodes the information in each slot in TI 1 of Frame 1. In a normal case, the UE decodes the first part in the slot 2 in TI 1 of Frame 1, and detects that the first part (namely, 10110) is the same as the first five bits of the ID of the UE (namely, the UE). Based on the predefined association mapping relationship between the first time period and the second time period, the UE receives the second code block R2 in the slot 2 in TI 2 of Frame 2, and decodes the second code block R2. The UE decodes the second code block R2 only once in the slot 2 in TI 2 of Frame 2, and does not need to receive and decode information in a slot other than the slot 2 in TI 2 of Frame 2. Therefore, use time of the decoder is reduced, and power consumption of the UE is further reduced.

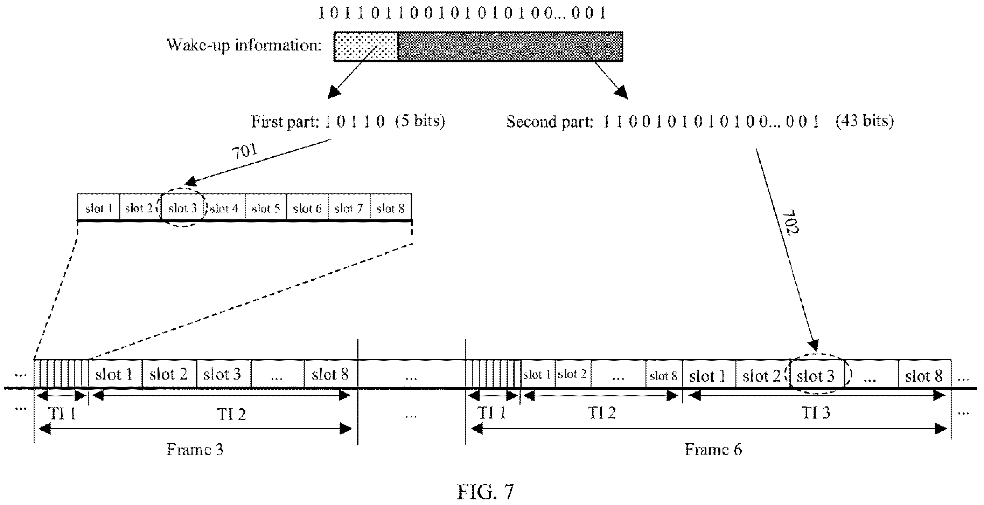

For another example, as shown in FIG. 7, it is predefined in a communication protocol that the second device sends the first part and the second part in two non-adjacent frames, and slot sequence numbers used for sending the first part and the second part are the same. For example, the association mapping relationship between the first time period and the second time period is predefined as m2=m1+3 and s2=s1 according to the communication protocol. If the first part of the wake-up information is sent in a slot 3 (that is, s1=3) in TI 1 of Frame 3 (that is, m1=3), the second part is sent in a slot 3 (that is, s2=3) in TI 2 of Frame 6 (that is, m2=m1+3=3+3=6). Frame 3 indicates a number m1 of a frame used by the second device to send the first part of the wake-up information is 3. Frame 6 indicates that a number m2 of a frame used by the second device to send the second part of the wake-up information is 6. It can be learned that the first time period is a third (that is, s1=3) slot (namely, a slot 3) in TI 1 of Frame 3, as shown in 701 in FIG. 7. The second time period is a third (that is, s2=3) slot (namely, a slot 3) in TI 3 of Frame 6, as shown in 702 in FIG. 7. It can be learned from the predefinition that the second device sends an encoding result R1 of the first part in the slot 3 in TI 1 of Frame 3 (namely, the first time period), and sends the second code block R2 in the slot 3 of TI 3 in Frame 6 (namely, the second time period).

For a UE (namely, the first device) end, the UE first monitors information in each slot in TI 1 of Frame 3, that is, the UE receives and decodes the information in each slot in TI 1 of Frame 3. In a normal case, the UE decodes the first part in the slot 3 in TI 1 of Frame 3, and detects that the first part (namely, 10110) is the same as the first five bits of the ID of the UE (namely, the UE). Based on the predefined association mapping relationship between the first time period and the second time period, the UE receives the second code block R2 in the slot 3 in TI 3 of Frame 6, and decodes the second code block R2. It can be learned that the UE decodes the second code block R2 only once in the slot 3 in TI 3 of Frame 6, and does not need to receive or decode information in a slot other than the slot 3 in TI 3 of Frame 6. Therefore, use time of the decoder is reduced, and power consumption of the UE is further reduced.

In this embodiment, based on the association relationship between the second time period and the first time period, the second device sends the first part to the first device (namely, the target device) in the first time period, and sends the second part in the second time period. After receiving the first part in the first time period, the first device determines, based on the association relationship between the second time period and the first time period, that the second part sent by the second device needs to be monitored only in the second time period, and that monitoring does not need to be performed in another time period. In this way, the target device does not perform an invalid monitoring operation in a time period other than the second time period, to reduce power consumption of monitoring the wake-up information by the second device.

The foregoing describes the association relationship between the first time period and the second time period predefined according to the communication protocol. The following describes an implementation of indicating the second time period by indication information carried in the first part.

In an embodiment, the second device sends the first part of the wake-up information, where the first part further includes indication information, and the indication information indicates a second time period. That the second device sends the second part includes: The second device sends the second part in the second time period. That the first device monitors the second part of the wake-up information includes: The first device monitors the second part in the second time period, where the second time period is indicated by the indication information in the first part.

For example, the wake-up information is divided into a plurality of parts, and the indication information may indicate a location of a time domain resource used in a part other than the first part (for example, the second part). For example, the indication information indicates a location of the second time period (namely, a time domain resource) used in the second part.

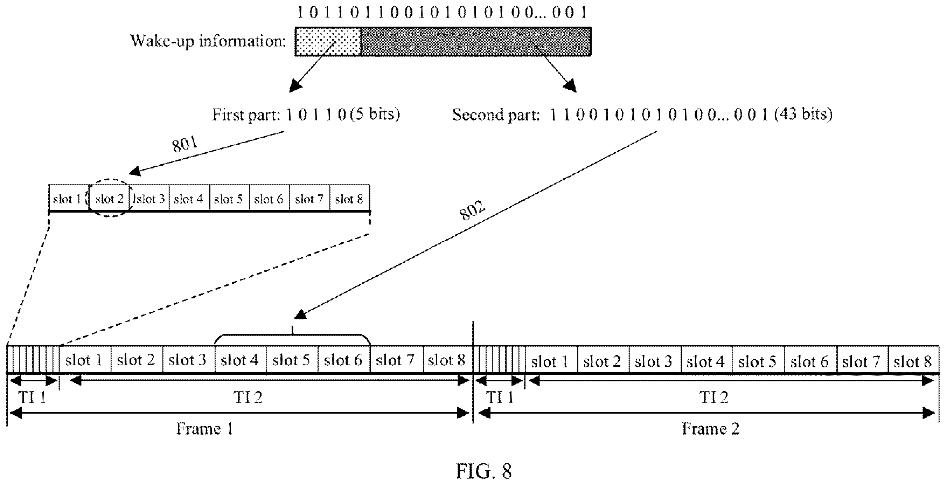

For another example, as shown in FIG. 8, the first time period is a slot 2 in TI 1 of Frame 1, as shown in 801. The second time period is indicated by indication information A in the first part, and the indication information A indicates that the second time period is a slot 4 to a slot 6 in TI 2 of Frame 1, as shown in 802. The second device sends an encoder output of the first part of the wake-up information in the slot 2 in TI 1 of Frame 1 (namely, the first time period), and sends an encoding result of the second part in the slot 4 to slot 6 in TI 2 of Frame 1 (namely, the second time period).

A first device end first monitors information in each slot in TI 1 of Frame 1, that is, the UE receives and decodes the information in each slot in TI 1 of Frame 1. In a normal case, the first device decodes the first part in the slot 2 in TI 1 of Frame 1, and detects that the first part (namely, 10110) is the same as the first 5 bits of the ID of the first device (namely, the first device). Based on the location of the second time period indicated by the indication information A, the first device receives the encoding result of the second part in the slot 4 to the slot 6 in TI 2 of Frame 1, and decodes the encoding result of the second part. It can be learned that the first device decodes the encoding result of the second part only once in the slot 4 to the slot 6 in TI 2 of Frame 1, and does not need to receive and decode information in a slot other than the slot 4 to the slot 6 in TI 2 of Frame 1. Therefore, use time of the decoder is reduced, and power consumption of the UE is further reduced.

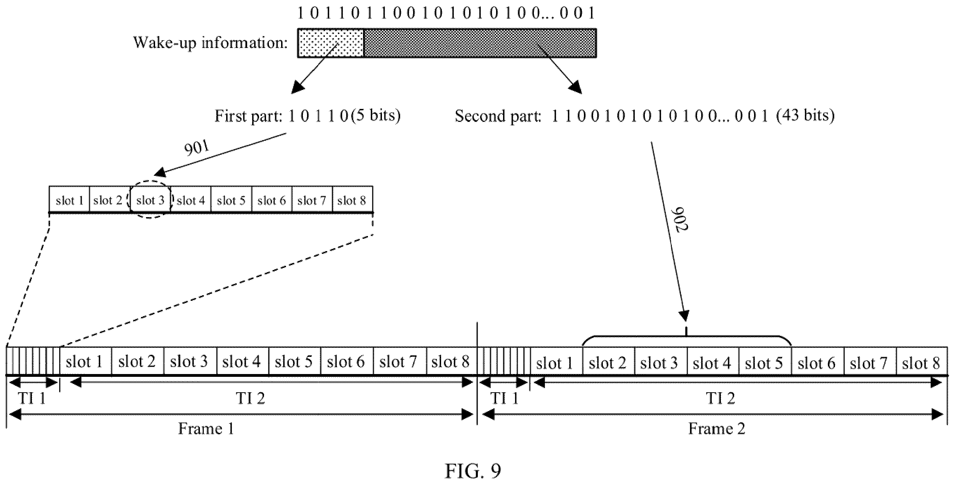

For another example, as shown in FIG. 9, the first time period is a slot 3 in TI 1 of Frame 1, as shown in 901. The second time period is indicated by indication information B in the first part, and the indication information B indicates that the second time period is a slot 2 to a slot 5 in TI 2 of Frame 2, as shown in 902. The second device sends an encoding result of the first part in the slot 3 in TI 1 of Frame 1 (namely, the first time period), and sends an encoding result of the second part in the slot 2 to the slot 5 in TI 2 of Frame 2 (namely, the second time period). Frame 1 and Frame 2 are adjacent frame structures. Certainly, Frame 1 and Frame 2 may alternatively be non-adjacent frame structures. When Frame 1 and Frame 2 are non-adjacent frame structures, a manner in which the indication information B indicates the second time period is similar to a manner in which the indication information B indicates the second time period when Frame 1 and Frame 2 are adjacent frame structures. Details are not described herein again. A manner in which the first device receives the first part and the second part based on the first time period and the second time period is similar to a manner and an effect of the embodiment shown in FIG. 8, and details are not described herein again.

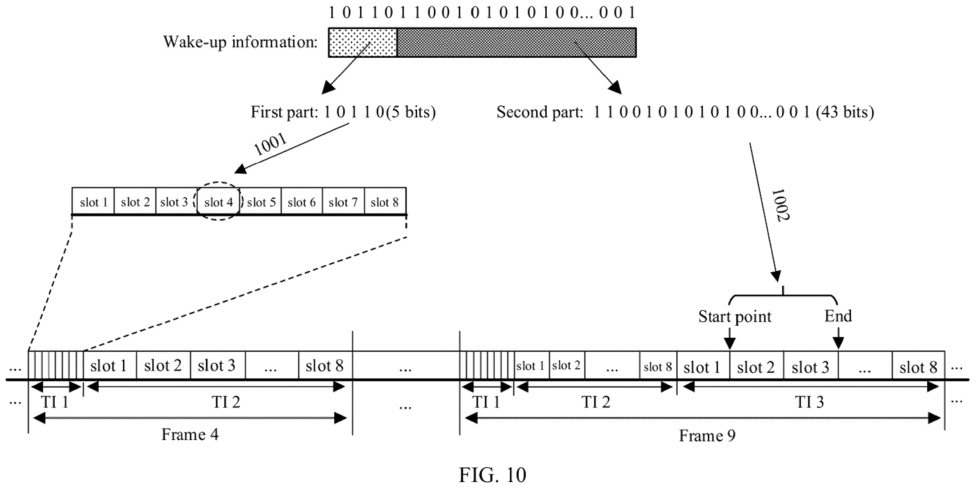

For another example, as shown in FIG. 10, the first time period is a slot 4 in TI 1 of Frame 4, as shown in 1001. The second time period is indicated by indication information C in the first part, and the indication information C indicates that the second time period is a slot from a slot 2 (that is, the slot 2 is a start point) to a slot 3 (that is, the slot 3 is an end point) in TI 3 of Frame 9, as shown in 1002. Optionally, the indication information C may further indicate that the second time period is a segment of slots that consecutively occupy two slots starting from the slot 2 in TI 3 of Frame 9, that is, the second time period is the slot 2 to the slot 3 in TI 3 of Frame 9. The second device sends an encoding result of the first part in the slot 4 in TI 1 of Frame 4 (namely, the first time period), and sends an encoding result of the second part in the slot 2 to the slot 3 in TI 3 of Frame 9 (namely, the second time period). A manner in which the first device receives the first part and the second part based on the first time period and the second time period is similar to a manner and an effect of the embodiment shown in FIG. 8, and details are not described herein again.

For another example, the second device sends a plurality of parts (for example, a first part and a second part) of the wake-up information to a terminal group A, where the terminal group A includes a plurality of terminals (for example, a plurality of UEs). The second device sends the first part of the wake-up information to the terminal group A. Each of the plurality of terminals receives the first part, and receives and decodes the first part. After decoding the first part, each terminal determines that the wake-up information is sent to a terminal X, where the terminal X is one of the plurality of terminals. The terminal X determines, based on the indication information in the first part, a slot location (namely, the used second time period) used by the second device to send the second part. The terminal X receives the second part in the second time period. For a manner in which the indication information indicates the second time period, refer to the manner in which the indication information indicates the second time period in the embodiments shown in FIG. 8 to FIG. 10. Details are not described herein again.

In this embodiment, compared with that in a manner of predefining (that is, predefining according to a communication protocol) the second time period, the second time period is flexibly indicated by the indication information in the first part, so that flexibility of time domain resource scheduling by a communication system can be improved.

The foregoing describes an implementation in which the association relationship between the first time period and the second time period is predefined according to the communication protocol, and the second time period is indicated by the indication information carried in the first part. The following describes a relationship between an information amount of the first part (or the second part) and an information bearing amount in the first time period (or the second time period).

In an embodiment, a data amount of the first part of the wake-up information is less than or equal to a data bearing amount in the first time period, a data amount of the second part of the wake-up information is less than or equal to a data bearing amount in the second time period, the first time period is a time period in which the first device receives the first part of the wake-up information, and correspondingly, the first time period is also a time period in which the second device sends the first part of the wake-up information. The second time period is a time period in which the first device monitors the second part of the wake-up information, and correspondingly, the second time period is also a time period in which the second device sends the second part of the wake-up information.

The data amount of the first part is a quantity of bits (bit) after the first part is encoded. The data bearing amount in the first time period is a maximum quantity of bits of data that can be carried in the first time period. For example, the wake-up information (namely, source data of the wake-up information) is divided into the first part and the second part. A quantity of bits of the first part (namely, the source data) is 4 bits, the first part is encoded by a BCH code encoder to obtain first encoded data, a quantity of bits of the first encoded data is 12 bits (that is, the data amount of the first part is 12 bits), and the data bearing amount in the first time period is 15 bits. Because the quantity of bits of the first encoded data (namely, 12 bits) is less than 15 bits the data bearing amount in the first time period, the second device can successfully send the first encoded data in the first time period. Correspondingly, the first device can successfully receive the first encoded data in the first time period.

Similarly, the data amount of the second part is a quantity of bits after the second part is encoded, and the data bearing amount in the second time period is a maximum quantity of bits of data that can be carried in the second period. For example, the wake-up information (namely, source data of the wake-up information) is divided into the first part and the second part. A quantity of bits of the second part (namely, the source data) is 32 bits, the second part is encoded by a BCH code encoder to obtain second encoded data, a quantity of bits of the second encoded data is 56 bits (that is, a data amount of the second part is 56 bits), and the data bearing amount in the second time period is 64 bits. Because the quantity of bits of the second encoded data (namely, 56 bits) is less than 64 bits the data bearing amount in the second time period, the second device can successfully send the second encoded data in the second time period. Correspondingly, the first device can detect the second encoded data in the second time period.

In this embodiment, the data amount of the first part is less than or equal to the data bearing amount in the first time period, so that it can be ensured that the first part of the wake-up information is sent once and for all, and the second device does not need to send the first part a plurality of times. The data amount of the second part is less than or equal to the data bearing amount in the second time period, so that it can be ensured that the second part of the wake-up information is sent once and for all, and the second device does not need to send the second part a plurality of times. Therefore, in this embodiment, power consumption of sending the wake-up information by the second device can be reduced. Correspondingly, the data amount of the first part is less than or equal to the data bearing amount in the first time period, so that it can be ensured that the first part of the wake-up information is received once and for all, and the first device does not need to monitor the first part a plurality of times. The data amount of the second part is less than or equal to a data bearing amount in the second time period, so that it can be ensured that the second part of the wake-up information is received once and for all, and the first device does not need to monitor the second part a plurality of times. Therefore, in this embodiment, power consumption of monitoring wake-up information by the first device can be reduced.

In another embodiment, the data amount of the first part is the same as the data bearing amount in the first time period, and the data amount of the second part is the same as the data bearing amount in the second time period. The first time period is a time period in which the first device receives the first part, and correspondingly, the first time period is a time period in which the second device sends the first part. The second time period is a time period in which the first device monitors the second part, and correspondingly, the second time period is a time period in which the second device sends the second part. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation.

That the second device sends the data amount of the first part and the data amount of the second part includes the following four cases: Case 1: The data amount of the first part sent by the second device includes the padding data amount, and the data amount of the second part sent by the second device includes the padding data amount. Case 2: The data amount of the first part sent by the second device includes the padding data amount, and the data amount of the second part sent by the second device is the remaining data amount of the encoded second part after data truncation. Case 3: The data amount of the first part sent by the second device is the remaining data amount of the encoded first part after data truncation, and the data amount of the second part sent by the second device includes the padding data amount. Case 4: The data amount of the first part sent by the second device is the remaining data amount of the encoded first part after data truncation, and the data amount of the second part sent by the second device is the remaining data amount of the encoded second part after data truncation.

The following uses Case 1 and Case 2 as examples. For processing manners of Case 3 and Case 4, refer to Case 1 and Case 2. Details are not described herein again.

Case 1 is used as an example. The data amount is a quantity of bits. The padding data amount may be a quantity of bits added when the second device pads the first part (or the second part), or may be a quantity of bits added when the second device pads an encoding result of the first part (or the second part). For example, the padding data amount is the quantity of bits added when the second device pads the first part. The second device encodes the first part by using an encoder A (for example, a BCH code encoder) based on an indication of a network (for example, a base station) or a protocol agreement (namely, a format specification of a communication protocol). If a data length of the first part is 4 bits, and the encoder A requires that a data length of an input first part (namely, to-be-encoded data) is 5 bits, the quantity of bits added when the second device pads the first part is 1 (that is, the padding data amount is 5-4=1). In this case, the second device may supplement the data length of the first part from 4 bits to 5 bits in a data padding manner, and an amount of padding data included in the 5 bits is 1. The data padding manner includes but is not limited to a zero padding manner, a 1 padding manner, and a copying manner. The zero padding manner means that zero is directly padded at a start location or an end location of the first part. For example, the first part is 1101, and the first part obtained after zero padding is 11010. A fifth bit (namely, the underlined "0") of "11010" counted from left to right is 0 added by the second device to a last bit of the first part. After padding the first part with 0, the second device obtains a 5-bit first part. In this case, the second device may encode the first part by using the encoder A. The second device inputs the 5-bit first part into the encoder A, and the encoder A outputs 15-bit encoded data. In other words, first encoded data is 15 bits (that is, the data amount of the first part is 15 bits), and a padding data amount included in the 15-bit data amount of the first part is 1. If the data bearing amount in the first time period is 15 bits, the data amount of the first part is the same as the data bearing amount in the first time period. In this case, the second device may successfully send the first encoded data.

In the foregoing manner of adding 1, 1 is directly padded at a start location or an end location of the first part. For example, the first part is 1101 (4 bits), and the first part obtained after 1 padding is 11011. A fifth bit (namely, the underlined "1") of "11011" counted from left to right is 1 added by the second device to a last bit of the first part. After padding the first part with 1, the second device obtains a 5-bit first part. To be specific, a quantity of bits added when the second device pads the first part is 1 (that is, a padding data amount is 5-4=1). In this case, the second device may encode the first part by using the encoder A. The second device inputs the 5-bit first part into the encoder A, and the encoder A outputs 15-bit encoded data, that is, first encoded data is 15 bits (that is, the data amount of the first part is 15 bits). If the data bearing amount in the first time period is 15 bits, the data amount of the first part is the same as the data bearing amount in the first time period. In this case, the second device may successfully send the first encoded data.

The foregoing copying manner means that first several bits of data in the first part are copied to a last bit of the first part. For example, the first part is 0101 (4 bits), and the first part obtained in the copying manner is 01010, where a fifth bit (namely, the underlined "0") of "01010" counted from left to right means that the second device copies "0" at a first bit of the first part to a last bit of the first part. After copying the first part, the second device obtains a 5-bit first part. To be specific, a quantity of bits added when the second device pads the first part is 1 (that is, a padding data amount is 5-4=1). In this case, the second device may encode the first part by using the encoder A. The second device inputs the 5-bit first part into the encoder A, and the encoder A outputs 15-bit encoded data, that is, the first encoded data is 15 bits (that is, the data amount of the first part is 15 bits). If the data bearing amount in the first time period is 15 bits, the data amount of the first part is the same as the data bearing amount in the first time period. In this case, the second device may successfully send the first encoded data.

When the padding data amount is the quantity of bits added when the second device pads the second part, to be specific, a data length of the second part is less than a length of the encoder A, a manner in which the second device pads the second part is similar to that of padding the first part. Details are not described herein again.

For another example, the padding data amount is a quantity of bits added when the second device pads an encoding result of the first part (or the second part). For example, the second device encodes the first part by using a BCH code encoder. If a bit length of the encoding result of the first part is 12 bits, and the data bearing amount in the first time period is 15 bits, the quantity of bits added when the second device pads the encoding result of the first part is 3 (that is, the padding data amount is 15-12=3). Before sending the encoding result of the first part, the second device pads the encoding result of the first part with data. A data padding manner includes but is not limited to a zero padding manner, a 1 padding manner, and a copying manner, and is the same as the foregoing manner. For example, the encoding result of the first part is 1101101... 010 (12 bits). The second device directly adds three 0s to the end of the encoding result of the first part (to be specific, the padding data amount is 15-12=3), to obtain an encoding result of a padded first part (namely, 1101101... 010000 (15 bits)). A bit length of the encoding result of the first part after padding is 15 bits, that is, the data amount of the first part is 15 bits. The data amount of the first part is 15 bits, and a padding data amount included in 15 bits the data amount of the first part is 3. The data amount of the first part is the same as 15 bits the data bearing amount in the first time period. Therefore, the second device may successfully send the data amount of the first part in the first time period.

A processing manner in which the padding data amount is the quantity of bits added when the second device pads the encoding result of the second part is similar to a processing manner in which the padding data amount is the quantity of bits added when the second device pads the encoding result of the first part. Details are not described herein again.

The information amount of the first part is a remaining data amount obtained after the second device truncates data of an encoded first part (or an encoded second part).

For example, the second device performs data truncation on the encoded first part (namely, the encoding result of the first part). The data truncation manner includes but is not limited to a direct truncation (puncture) manner and an agreed rule-based truncation manner. The direct truncation manner refers to directly removing some bits from the encoded first part (or the encoded second part), or directly removing some bits from the encoded first part (or the encoded second part). The agreed rule-based truncation manner refers to removing, according to an agreed rule, bits at fixed locations in the encoded first part (or the encoded second part), or removing, according to an agreed rule, some bits in the encoded first part (or the encoded second part). For example, the encoded first part is 11010... 010100010 (15 bits), and the second device truncates a last bit "0" (namely, the underlined "0") of the encoded first part, to obtain a 14-bit encoded first part (namely, 11010... 01010001). In this case, the information amount of the first part is 14 bits of the encoded first part. If the data bearing amount in the first time period is 14 bits, the information amount of the first part is the same as 14 bits the data bearing amount in the first time period. In this case, the second device may successfully send the encoded first part after truncation.

For another example, the second device encodes the second part by using a BCH code encoder. A bit length of an encoding result of the second part is 36 bits, and the data bearing amount in the second time period is 32 bits. Before sending the encoding result of the second part, the second device performs data truncation on the encoding result of the second part. For example, the encoding result of the second part is 11011010001...

101010 (36 bits), and the second device directly truncates four bits from the end of the encoding result of the second part, to obtain an encoding result of a truncated second part (namely, 11011010001... 10 (32 bits)). A bit length of the encoding result of the truncated second part is 32 bits, to be specific, the data amount of the second part is 32 bits. The data amount of the second part is the same as 32 bits the data bearing amount in the second time period. Therefore, the second device may successfully send the encoding result of the truncated second part in the second time period.

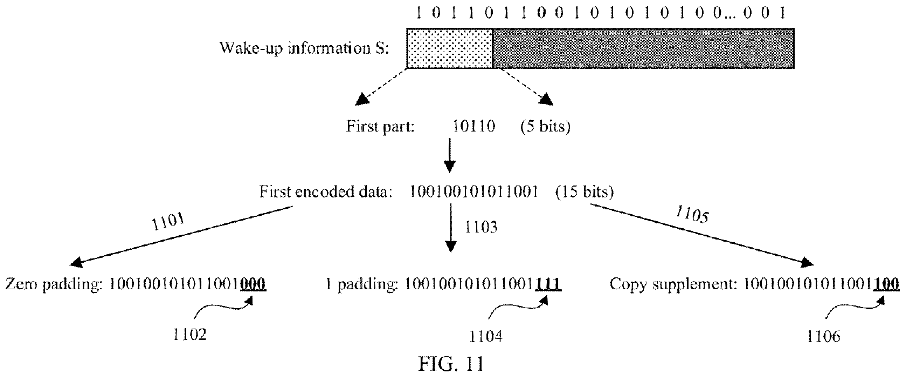

Case 2 in which the data amount of the first part sent by the second device includes a padding data amount, and the data amount of the second part sent by the second device is a remaining data amount of the encoded second part after data truncation is further used as an example. For example, the second device pads data of the encoded first part, and truncates data of the encoded second part. For example, as shown in FIG. 11, the data bearing amount in the first time period is 18 bits, and wake-up information S is 10110110010101010... 001 (48 bits). The second device divides the wake-up information S into a first part and a second part, where the first part is 10110 (5 bits), and the second part is 110010101010...001 (43 bits). After the first part is encoded by an encoder K, first encoded data (namely, 100100101011001 (15 bits)) is obtained. Because a bit length 15 bits of the first encoded data is less than the data bearing amount 18 bits in the first time period, the second device performs a padding operation on the first encoded data before sending the first encoded data. A padding data amount is 18-15=3 bits. A data padding manner includes but is not limited to a zero padding manner, a 1 padding manner, and a copying manner. In the zero padding manner shown in 1101 in FIG. 11, the second device directly supplements three 0s after the first encoded data, as shown in 1102, so that the data amount of the first part (that is, a bit length of the first encoded data obtained after supplement is 18 bits) is the same as the data bearing amount in the first time period. The second device may successfully send the first encoded data after padding.

Further, in a padding 1 manner shown in 1103 in FIG. 11, the second device directly supplements three 1s after the first encoded data, as shown in 1103, so that the data amount of the first part (that is, a bit length of the first encoded data obtained after supplement is 18 bits) is the same as the data bearing amount in the first time period. The second device may successfully send the first encoded data after padding.

Further, in a copying manner shown in 1105 in FIG. 11, the second device copies first 3 bits of the first encoded data to the end of the first encoded data, as shown in 1106, so that the data amount of the first part (that is, a bit length of the first encoded data after padding is 18 bits) is the same as the data bearing amount in the first time period. The second device may successfully send the first encoded data after padding in the first time period.

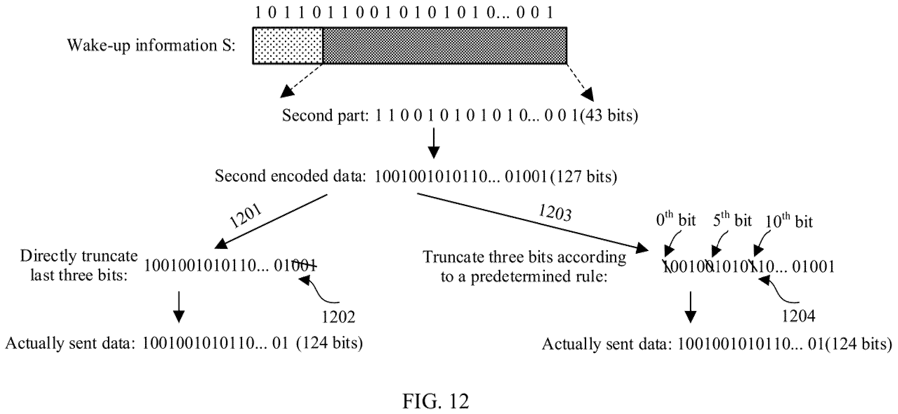

For another example, if an amount of data that can be carried in the second time period is less than a bit length of encoded data output by an encoder, the second device needs to truncate the bit length of the encoded data output by the encoder. As shown in FIG. 12, for example, the data bearing amount in the second time period is 124 bits, and wake-up information S is 10110110010101010... 001 (48 bits). The second device divides the wake-up information S into a first part and a second part, where the first part is 10110 (5 bits), and the second part is 110010101010... 001 (43 bits). The second part is encoded by an encoder G to obtain second encoded data (namely, 100100101011001... 001 (127 bits)). A quantity of bits that need to be truncated by the second device is 127-124=3 bits. Because the second encoded data of 127 bits is greater than the data bearing amount of 124 bits in the second time period, the second device performs a truncation operation on the second encoded data before sending the second encoded data. The data truncation manner includes but is not limited to a direct truncation manner and an agreed rule-based truncation manner. For example, in a direct truncation manner shown in 1201 in FIG. 12, the second device directly truncates three bits after the second encoded data (namely, the encoded second part). For example, 001 is crossed out by a line shown in 1202, and the second encoded data obtained after truncation is 1001001010110... 01 (124 bits), that is, the data amount of the second part is the second encoded data obtained after truncation 1001001010110... 01 (124 bits). The data amount of the second part is the same as the data bearing amount (namely, 124 bits) in the second time period. The second device may successfully send, in the second time period, the second encoded data obtained after truncation (that is, actually sent data is 1001001010110... 01).

Further, in the agreed rule-based truncation manner shown in 1203 in FIG. 12, the second device may truncate three bits from the second encoded data according to an agreed rule, for example, a 0th bit 1, a 5th bit 0, and a 10th bit 1 that are crossed out by lines shown in 1203, so that the data amount of the second part (that is, the bit length of the second encoded data obtained after truncation is 124 bits) is the same as the data bearing amount (namely, 124 bits) in the first time period. The second device may successfully send, in the second time period, the second encoded data obtained after truncation (that is, actually sent data is 1001001010110...01).

For another example, in an agreed rule-based truncation manner, if $N_{punc}$ (that is, $N_{punc}=N_{enc}-N_{sl}$) is a quantity of bits that need to be discarded, $N_{enc}$ is a length of encoded bits (namely, a quantity of encoded bits), and $N_{sl}$ is an amount of data that can be carried in the first time period. The second device may determine, according to the following formula, the quantity of bits (namely, $N_{punc}$) that need to be discarded:

$$n_{offset}=mod\ (n,\ N)$$

In the formula, n is a sequence number of bits in the encoded first part, N is a round-up result of a ratio of $N_{enc}$ to $N_{punc}$, and $n_{offset}$ is an integer specified in a communication protocol or agreed on by a transmit end and a receive end. For example, as shown in FIG. 12, $N_{enc}=15$, $N_{sl}=12$, $N_{punc}=N_{en}-N_{sl}=3$, $n_{offet}=0$, and N=5, where n is 0, 1, 2, 3, 4, ..., or 14. The second device determines, based on mod (n, 5)=0, that a 0th (that is, n=0) bit, a fifth (that is, n=5) bit, and a tenth (that is, n=10) bit in the encoded first part (namely, the first encoded data) needs to be discarded, as shown in 1204. The first encoded data is 100100101011001, and the second device truncates underlined bits in the first code block. In this case, actually sent data is 001010101001 (12 bits). After truncating the first encoded data according to an agreed rule, the second device obtains that a length of actually sent bits (namely, 12 bits) is equal to the data bearing amount (namely, 12 bits) in the first time period.

In this embodiment, because the data amount of the first part is the same as the data bearing amount in the first time period, and the data amount of the second part is the same as the data bearing amount in the second time period, the second device may send the first part once and for all in the first time period, and send the second part once and for all in the second time period, without sending the second part in a plurality of time periods, to reduce sending power consumption of the second device. Correspondingly, the first device may receive the first part once and for all in the first time period, and receive the second part once and for all in the second time period, and does not need to perform receiving in a plurality of time periods. This reduces sending power consumption of the second device.

S402: When the first device receives the first part of the wake-up information and the first part includes an identifier of the first device or a group identifier of the first device, the first device monitors the second part of the wake-up information.

When detecting, through the first link, the first part sent by the second device, the first device decodes the first part to obtain a decoding result. When the first device determines, based on the decoding result, that the first part includes the identifier of the first device or the group identifier of the first device, it indicates that the wake-up information may be used to wake up the first device (namely, the first device). In this case, the first device monitors the second part of the wake-up information. Herein, the first device may monitor the second part through the first link, or may monitor the second part through a link other than a main link. This is not limited in this application.

S403: The first device wakes up the second link when the first device receives the second part, where power consumption of the second link is greater than power consumption of the first link.

When the first device receives the first part, the first device decodes the first part. When the decoding result of the first part indicates that the identifier information carried in the first part includes the identifier of the first device or the group identifier of the first device, the first device determines that the wake-up information may be sent to the first device. Therefore, the first device continues to monitor the second part of the wake-up information. When receiving the second part, the first device selects a corresponding decoder based on an encoder parameter to decode the second part. After the second part is decoded, the first device determines that the wake-up information is sent to the first device, and the second device wakes up the second link. The second link (namely, the main link) is usually used to receive and send service data. For example, the second device sends service data (for example, video data) to the first device, or the first device uploads service data to the second device. When there is no sending/receiving task between the first device and the second device, the second link of the first device is usually in a sleep state, and the first device monitors, through the first link (namely, the wake-up link), the wake-up information sent by the second device.

Because the second device uses two short encoders to encode the first part and the second part, correspondingly, the first device may use two short decoders to decode the received first part and the received second part. Compared with a case in which the first device decodes each piece of wake-up information by using a long decoder, power consumption of the first device for decoding by using the two short decoders (namely, decoders corresponding to the short encoders) is less than power consumption of the first device for decoding by using the long decoder. Therefore, in this embodiment, power consumption of the wake-up link of the first device (namely, a receive device) is reduced.

In an embodiment, the method further includes: The first device skips an operation of monitoring the second part when any one of the following cases is met: the first device does not receive the first part, or the first part does not include the identifier of the first device or the group identifier of the first device.

The second device separately encodes a plurality of parts (for example, the first part and the second part) of the wake-up information, and sends the plurality of parts to the first device. The second device may simultaneously send the first part and the second part (as shown in FIG. 4), or may first send the first part and then send the second part.

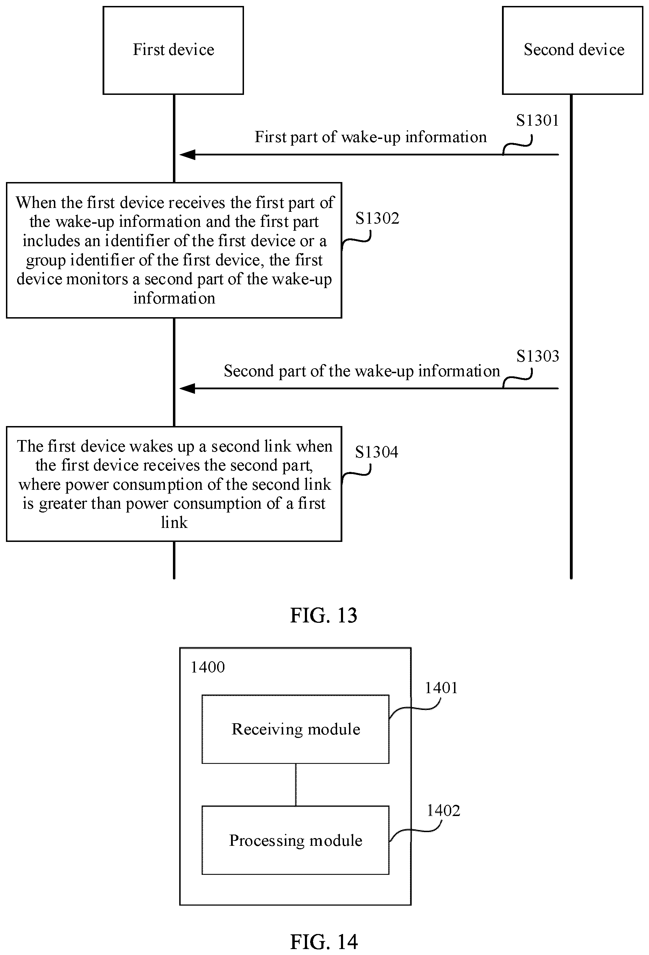

For example, as shown in FIG. 13, the second device sends the first part of the wake-up information to the first device in the first time period, as shown in S1301. The first device receives the first part in the first time period. When the first device receives the first part and the first part includes the identifier of the first device or the group identifier of the first device, the first device monitors the second part of the wake-up information, as shown in S1302. The second device sends the second part of the wake-up information to the first device in the second time period, as shown in S1303. The first device monitors the second part in the second time period. When the first device receives the second part, the first device wakes up the second link, as shown in S1304.

When the first device does not receive the first part through the first link, the first device skips monitoring the second part sent by the second device. When the first part detected by the first device does not include the identifier of the first device or the group identifier of the first device, it indicates that the wake-up information sent by the second device is not sent to the first device (namely, the first device). In this case, the first device may skip an operation of monitoring the second part (that is, the first device does not monitor or receive information in the second part).

In this embodiment, the first device first monitors the first part through the low-power first link. When the first device does not receive the first part, or the first part does not include the identifier of the first device or the group identifier of the first device, it indicates that the wake-up information is not sent to the first device (namely, the first device), and the first device does not need to monitor the second part or decode the second part, to reduce power consumption generated when the first device monitors and decodes the wake-up information, and further reduce power consumption of the first device.

In conclusion, the device needs to decode complete wake-up information before determining whether the wake-up information is information for waking up the device. Therefore, the device needs to decode each piece of wake-up information by using a long decoder. In this application, the wake-up information is split into at least two parts, the first part of the wake-up information may include an identifier or a group identifier of the device. The first device first decodes the first part of the wake-up information. If the first part of the wake-up information includes the identifier or the group identifier of the first device, the first device determines that the wake-up information is information used to wake up the first device. In this case, the first device may continue to monitor and decode the second part of the wake-up information. Because the wake-up information is divided into the at least two parts, the first device may decode the at least two parts of the wake-up information by respectively using at least two decoders shorter than a decoder in the solution in the conventional technology. However, power consumption of performing decoding by using the at least two short decoders is less than power consumption of performing decoding by using the long decoder in the conventional technology. Therefore, in this embodiment, power consumption of the wake-up link of the first device (namely, a receive device) is reduced.

FIG. 14 shows an apparatus 1400 for waking up a communication link according to this application. The apparatus 1400 includes a receiving module 1401 and a processing module 1402. The receiving module 1401 is configured to monitor a first part of wake-up information through a first link, and is further configured to: when receiving the first part of the wake-up information and the first part includes an identifier of the apparatus or a group identifier of the apparatus, monitor a second part of the wake-up information. The processing module 1402 is configured to wake up a second link when the receiving module 1401 receives the second part, where power consumption of the second link is greater than power consumption of the first link.

For a specific manner in which the apparatus 1400 performs the method for waking up a communication link and generated beneficial effects, refer to related descriptions in the method embodiment shown in FIG. 4.

In the apparatus 1400, the receiving module 1401 is further configured to monitor the second part in a second time period, where there is an association relationship between the second time period and a first time period, and the first time period is a time period in which the first part is received. For beneficial effects of performing this step by the receiving module 1401, refer to the foregoing embodiment.

In the apparatus 1400, the receiving module 1401 is further configured to monitor the second part in a second time period, where the second time period is indicated by indication information in the first part. For beneficial effects of performing this step by the receiving module 1401, refer to the foregoing embodiment.

In the apparatus 1400, a length of a decoder corresponding to the second part is greater than a length of a decoder corresponding to the first part. For beneficial effects of this part, refer to the foregoing embodiments.

In the apparatus 1400, a data amount of the first part is less than or equal to a data bearing amount in the first time period, a data amount of the second part is less than or equal to a data bearing amount in the second time period, the first time period is a time period in which the first part is received, and the second time period is a time period in which the receiving module 1401 in the apparatus 1400 monitors the second part. For beneficial effects of this part, refer to the foregoing embodiments.

In the apparatus 1400, a data amount of the first part is the same as a data bearing amount in the first time period, a data amount of the second part is the same as a data bearing amount in the second time period, the first time period is a time period in which the first part is received, and the second time period is a time period in which the receiving module 1401 in the apparatus 1400 monitors the second part. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation. For beneficial effects of this part, refer to the foregoing embodiments.

In the apparatus 1400, the first part includes all or a part of information of a temporary mobile subscriber identity. For beneficial effects of this part, refer to the foregoing embodiments.

In the apparatus 1400, the receiving module 1401 is further configured to skip an operation of monitoring the second part when any one of the following cases is met: the receiving module 1401 does not receive the first part, or the first part does not include the identifier of the apparatus 1400 or the group identifier of the apparatus 1400.

In the apparatus 1400, the first part includes a group identifier, and the second part includes a paging identifier. For beneficial effects of this part, refer to the foregoing embodiments.

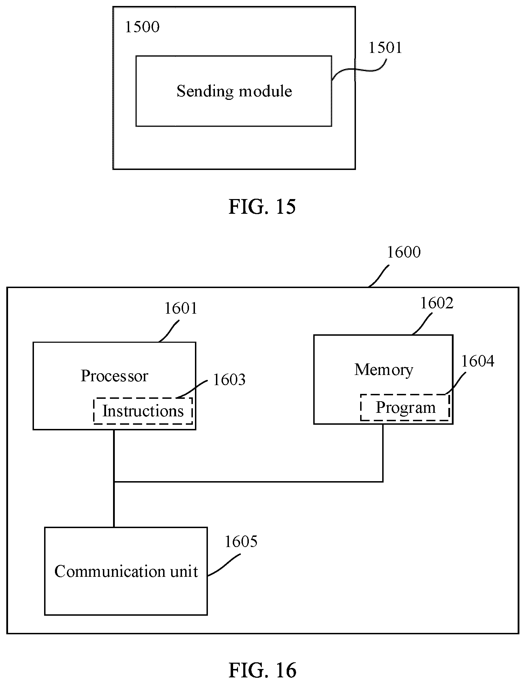

FIG. 15 shows an apparatus 1500 for waking up a communication link according to this application. The apparatus 1500 includes a sending module 1501. The sending module 1501 is configured to send a first part of wake-up information through a first link, where the first part includes identifier information, and the first part indicates a target device corresponding to the identifier information to monitor a second part of the wake-up information; and is further configured to send the second part, where the second part is used to wake up a second link of the target device, and power consumption of the second link is greater than power consumption of the first link. For beneficial effects of performing this step by the sending module 1501, refer to the foregoing embodiments.

In the apparatus 1500, the sending module 1501 is further configured to send the second part in a second time period, where there is an association relationship between the second time period and a first time period, and the first time period is a time period in which the sending module 1501 sends the first part. For beneficial effects of performing this step by the sending module 1501, refer to the foregoing embodiments.

In the apparatus 1500, the first part further includes indication information, and the sending module 1501 is further configured to send the second part in a second time period, where the indication information indicates the second time period. For beneficial effects of performing this step by the sending module 1501, refer to the foregoing embodiments.

In the apparatus 1500, a length of an encoder corresponding to the second part is greater than a length of an encoder corresponding to the first part. For beneficial effects of this part, refer to the foregoing embodiments.

In the apparatus 1500, a data amount of the first part is less than or equal to a data bearing amount in the first time period, a data amount of the second part is less than or equal to a data bearing amount in the second time period, the first time period is the time period in which the first part is sent, and the second time period is a time period in which the second part is sent. For beneficial effects of this part, refer to the foregoing embodiments.

In the apparatus 1500, a data amount of the first part is the same as a data bearing amount in the first time period, a data amount of the second part is the same as a data bearing amount in the second time period, the first time period is a time period in which the first part is sent, and the second time period is a time period in which the second part is sent. The data amount of the first part includes a padding data amount, or the data amount of the first part is a remaining data amount of an encoded first part after data truncation; and/or, the data amount of the second part includes a padding data amount, or the data amount of the second part is a remaining data amount of an encoded second part after data truncation. For beneficial effects of this part, refer to the foregoing embodiments.

In the apparatus 1500, the first part includes all or a part of information of a temporary mobile subscriber identity. For beneficial effects of this part, refer to the foregoing embodiments.

In the apparatus 1500, the first part includes a group identifier, and the second part includes a paging identifier. For beneficial effects of this part, refer to the foregoing embodiments.

FIG. 16 is a diagram of a structure of another device according to this application. A dashed line in FIG. 16 indicates that a unit or a module is optional. A device 1600 may be configured to implement the method described in the foregoing method embodiments. The device 1600 may be a server or a chip (system).

The device 1600 includes one or more processors 1601. The one or more processors 1601 may support the device 1600 in implementing the method in the method embodiment corresponding to FIG. 4. The processor 1601 may be a general-purpose processor or a dedicated processor. For example, the processor 1601 may be a central processing unit (Central Processing Unit, CPU). The CPU may be configured to: control the device 1600, execute a software program, and process data of the software program. The device 1600 may further include a communication unit 1605, configured to implement signal input (receiving) and output (sending).

The device 1600 may be a chip (system). The chip (system) includes a memory and a processor. The processor is configured to execute a computer program stored in the memory, to implement the methods shown in the foregoing embodiments.

The communication unit 1605 may be an input and/or output circuit of the chip (system), or the communication unit 1605 may be a communication interface of the chip (system). The chip (system) may be used as a component of the device 1600.

For another example, the communication unit 1605 may be a transceiver of the device 1600, or the communication unit 1605 may be a transceiver circuit of the device 1600.

The device 1600 may include one or more memories 1602. The memory 1602 stores a program 1604. The program 1604 may be run by the processor 1601 to generate instructions 1603, so that the processor 1601 performs, based on the instructions 1603, the method described in the foregoing method embodiments. Optionally, the memory 1602 may further store data. Optionally, the processor 1601 may further read the data stored in the memory 1602. The data and the program 1604 may be stored at a same storage address, or the data and the program 1604 may be stored at different storage addresses.

The processor 1601 and the memory 1602 may be disposed separately, or may be integrated together, for example, integrated on a system on chip (System On Chip, SOC) of a device.

For a specific manner in which the processor 1601 performs the method for waking up a communication link, refer to related descriptions in the method embodiments.

It should be understood that the steps in the foregoing method embodiments may be completed by using a logic circuit in a form of hardware or instructions in a form of software in the processor 1601. The processor 1601 may be a CPU, a digital signal processor (Digital Signal Processor, DSP), a field programmable gate array (Field Programmable Gate Array, FPGA), or another programmable logic device, for example, a discrete gate, a transistor logic device, or a discrete hardware component.

This application further provides a computer program product. When the computer program product is executed by the processor 1601, the method in any method embodiment of this application is implemented.

The computer program product may be stored in the memory 1602, for example, the program 1604. After processing processes such as preprocessing, compilation, assembly, and linking, the program 1604 is finally converted into an executable target file that can be executed by the processor 1601.

This application further provides a computer-readable storage medium, where the computer-readable storage medium stores a computer program, and when the computer program is executed by a computer, the method in any method embodiment in this application is implemented. The computer program may be a high-level language program, or may be an executable target program.

The computer-readable storage medium is, for example, the memory 1602. The memory 1602 may be a volatile memory or a non-volatile memory, or the memory 1602 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (SynchLink DRAM, SLDRAM), and a direct rambus random access memory (Direct Rambus RAM, DR RAM).

It may be clearly understood by a person skilled in the art that, for ease and brevity of description, for a specific working process and a generated technical effect of the foregoing apparatus and device, refer to a corresponding process and technical effect in the foregoing method embodiments, and details are not described herein again.

In the several embodiments provided in this application, the disclosed systems, apparatuses and methods may be implemented in other manners. For example, some features of the method embodiments described above may be ignored or not performed. The described apparatus embodiments are merely examples. Division into the units is merely logical function division and may be other division in actual implementation. A plurality of units or components may be combined or integrated into another system. In addition, coupling between the units or coupling between the components may be direct coupling or indirect coupling, and the coupling may include an electrical connection, a mechanical connection, or another form of connection.

The foregoing embodiments are merely used to describe the technical solutions of this application, but are not intended to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof. These modifications or replacements do not depart from the spirit and scope of the technical solutions of embodiments of this application, and shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for waking up a communication link, wherein the method comprises:

    monitoring, by a first device, a first part of wake-up information through a first link;
    when the first device receives the first part of the wake-up information and the first part comprises an identifier of the first device or a group identifier of the first device, monitoring, by the first device, a second part of the wake-up information; and
    waking up, by the first device, a second link when the first device receives the second part, wherein power consumption of the second link is greater than power consumption of the first link.

2. The method according to claim 1, wherein the monitoring, by the first device, a second part of the wake-up information comprises:
monitoring, by the first device, the second part in a second time period, wherein there is an association relationship between the second time period and a first time period, and the first time period is a time period in which the first part is received.

3. The method according to claim 1, wherein the monitoring, by the first device, a second part of the wake-up information comprises:
monitoring, by the first device, the second part in a second time period, wherein the second time period is indicated by indication information in the first part.

4. The method according to any one of claims 1 to 3, wherein
a length of a decoder corresponding to the second part is greater than a length of a decoder corresponding to the first part.

5. The method according to any one of claims 1 to 4, wherein a data amount of the first part is the same as a data bearing amount in the first time period, a data amount of the second part is the same as a data bearing amount in the second time period, the first time period is the time period in which the first part is received, and the second time period is a time period in which the first device monitors the second part;

    the data amount of the first part comprises a padding data amount, or the data amount of the first part is a remaining data amount of an encoded first part after data truncation; and/or
    the data amount of the second part comprises a padding data amount, or the data amount of the second part is a remaining data amount of an encoded second part after data truncation.

**6.** The method according to any one of claims 1 to 5, wherein the first part comprises all or a part of information of a temporary mobile subscriber identity.

**7.** The method according to any one of claims 1 to 6, further comprising: skipping, by the first device, an operation of monitoring the second part when any one of the following cases is met:

the first device does not receive the first part; or the first part does not comprise the identifier of the first device or the group identifier of the first device.

**8.** The method according to any one of claims 1 to 7, wherein the first part comprises a group identifier, and the second part comprises a paging identifier.

**9.** A method for waking up a communication link, wherein the method comprises:

sending, by a second device, a first part of wake-up information through a first link, wherein the first part comprises identifier information, and the first part indicates a target device corresponding to the identifier information to monitor a second part of the wake-up information; and sending, by the second device, the second part, wherein the second part is used to wake up a second link of the target device, and power consumption of the second link is greater than power consumption of the first link.

**10.** The method according to claim 9, wherein the sending, by the second device, the second part comprises: sending, by the second device, the second part in a second time period, wherein there is an association relationship between the second time period and a first time period, and the first time period is a time period in which the second device sends the first part.

**11.** The method according to claim 9, wherein the first part further comprises indication information, and the sending, by the second device, the second part comprises: sending, by the second device, the second part in a second time period, wherein the indication information indicates the second time period.

**12.** The method according to any one of claims 9 to 11, wherein a length of an encoder corresponding to the second part is greater than a length of an encoder corresponding to the first part.

**13.** The method according to any one of claims 9 to 12, wherein a data amount of the first part is the same as a data bearing amount in the first time period, a data amount of the second part is the same as a data bearing amount in the second time period, the first time period is the time period in which the first part is sent, and the second time period is a time period in which the second part is sent;

the data amount of the first part comprises a padding data amount, or the data amount of the first part is a remaining data amount of an encoded first part after data truncation; and/or the data amount of the second part comprises a padding data amount, or the data amount of the second part is a remaining data amount of an encoded second part after data truncation.

**14.** The method according to any one of claims 9 to 13, wherein the first part comprises all or a part of information of a temporary mobile subscriber identity.

**15.** The method according to any one of claims 9 to 14, wherein the first part comprises a group identifier, and the second part comprises a paging identifier.

**16.** An apparatus for waking up a communication link, wherein the apparatus comprises a receiving module and a processing module, and the receiving module is configured to monitor a first part of wake-up information through a first link, and is further configured to: when the receiving module receives the first part of the wake-up information and the first part comprises an identifier of the apparatus or a group identifier of the apparatus, monitor a second part of the wake-up information by the receiving module; and the processing module is configured to wake up a second link by the processing module when the receiving module receives the second part, wherein power consumption of the second link is greater than power consumption of the first link.

**17.** The apparatus according to claim 16, wherein the receiving module is further configured to monitor the second part in a second time period, wherein there is an association relationship between the second time period and a first time period, and the first time period is a time period in which the first part is received.

**18.** An apparatus for waking up a communication link, wherein the apparatus comprises a sending module, and the sending module is configured to send a first part of wake-up information through a first link, wherein the first part comprises identifier information, and the first part indicates a target device corresponding to the identifier information to monitor a second part of the wake-up information; and is further configured to send the second part, wherein the second part is used to wake up a second link of the target device, and power consumption of the second link is greater than power consumption of the first link.

19. The apparatus according to claim 18, wherein the sending module is further configured to send the second part in a second time period, wherein there is an association relationship between the second time period and a first time period, and the first time period is a time period in which the sending module sends the first part.

20. A device, wherein the device comprises a processor and a memory, the memory is configured to store a computer program, and the processor is configured to invoke the computer program from the memory and run the computer program, so that the device performs the method according to any one of claims 1 to 8.

21. A device, wherein the device comprises a processor and a memory, the memory is configured to store a computer program, and the processor is configured to invoke the computer program from the memory and run the computer program, so that the device performs the method according to any one of claims 9 to 15.

22. A computer-readable storage medium, wherein the computer-readable storage medium stores a computer program; and when the computer program is executed by a processor, the processor is enabled to perform the method according to any one of claims 1 to 15.

District 02 in the city A

UE 2

Data center D2

District 01 in a city A

UE 1

Data center D1

100

1011

Building B

Building D

YYY cell

UE 4

Building A

Building C

Building 2

Building 4

XXX cell

UE 3

Building 1

Building 3

101

FIG. 1

Network device

Information
source → Source encoding
201 → Channel encoding
202 → Modulation
203

Channel
204

Information
sink ← Source decoding
207 ← Channel decoding
206 ← Demodulation/
Detection 205

Receive device

FIG. 2

EP 4 580 263 A1

**Second device 301**

Encoder/ Decoder 3014

Controller 3011

Transmitter 3012

Receiver 3013

Main link Service data

Wake-up link Wake-up signal

**First device 302**

Main receiver 3022

Wake-up instruction

Controller 3021

Wake-up receiver 3023

300

FIG. 3

```
┌─────────────────────┐                              ┌─────────────────────┐
│     First device    │                              │    Second device    │
└─────────────────────┘                              └─────────────────────┘
```

First part of wake-up information and    S401
second part of the wake-up information

```
┌──────────────────────────────────────┐
│ When the first device receives the    │      S402
│ first part of the wake-up information  │
│ and the first part includes an         │
│ identifier of the first device or a    │
│ group identifier of the first device,  │
│ the first device monitors the second   │
│ part of the wake-up information         │
└──────────────────────────────────────┘
```

```
┌──────────────────────────────────────┐
│ The first device wakes up a second     │      S403
│ link when the first device receives the │
│ second part, where power consumption   │
│ of the second link is greater than      │
│ power consumption of a first link       │
└──────────────────────────────────────┘
```

FIG. 4

1 0 1 1 0 1 1 0 0 1 0 1 0 1 0 1 0 0... 0 0 1

Wake-up information:

First part: 1 0 1 1 0 (5 bits)   Second part: 1 1 0 0 1 0 1 0 1 0 1 0 0... 0 0 1 (43 bits)

501

| slot 1 | slot 2 | slot 3 | slot 4 | slot 5 | slot 6 | slot 7 | slot 8 |

502

| slot 1 | slot 2 | slot 3 | slot 4 | slot 5 | slot 6 | slot 7 | slot 8 | | slot 1 | slot 2 | slot 3 | slot 4 | slot 5 | slot 6 | slot 7 | slot 8 |

TI 1     TI 2

Frame 1     Frame 2

FIG. 5

EP 4 580 263 A1

1 0 1 1 0 1 1 0 0 1 0 1 0 1 0 1 0 0 ... 0 0 1

Wake-up information:

First part: 1 0 1 1 0 (5 bits)          Second part: 1 1 0 0 1 0 1 0 1 0 1 0 0 ... 0 0 1  (43 bits)

601

| slot 1 | slot 2 | slot 3 | slot 4 | slot 5 | slot 6 | slot 7 | slot 8 |

602

| | slot 1 | slot 2 | slot 3 | slot 4 | slot 5 | slot 6 | slot 7 | slot 8 | | slot 1 | slot 2 | slot 3 | slot 4 | slot 5 | slot 6 | slot 7 | slot 8 |

TI 1            TI 2                                    TI 1            TI 2

Frame 1                                                         Frame 2

FIG. 6

1 0 1 1 0 1 1 0 0 1 0 1 0 1 0 1 0 0... 0 0 1

Wake-up information:

First part: 1 0 1 1 0  (5 bits)          Second part:  1 1 0 0 1 0 1 0 1 0 1 0 0... 0 0 1   (43 bits)

701

| slot 1 | slot 2 | slot 3 | slot 4 | slot 5 | slot 6 | slot 7 | slot 8 |

702

| ... | slot 1 | slot 2 | slot 3 | ... | slot 8 | ... | ... | slot 1 | slot 2 | ... | slot 8 | slot 1 | slot 2 | slot 3 | ... | slot 8 | ... |

TI 1      TI 2          ...      TI 1      TI 2          TI 3

Frame 3                          Frame 6

FIG. 7

FIG. 8

Wake-up information: 1 0 1 1 0 1 1 0 0 1 0 1 0 1 0 1 0 0 ... 0 0 1

First part: 1 0 1 1 0 (5 bits)

Second part: 1 1 0 0 1 0 1 0 1 0 1 0 0 ... 0 0 1 (43 bits)

901

902

slot 1 | slot 2 | slot 3 | slot 4 | slot 5 | slot 6 | slot 7 | slot 8

Frame 1: slot 1 | slot 2 | slot 3 | slot 4 | slot 5 | slot 6 | slot 7 | slot 8 — TI 2 — TI 1

Frame 2: slot 1 | slot 2 | slot 3 | slot 4 | slot 5 | slot 6 | slot 7 | slot 8 — TI 2 — TI 1

FIG. 9

FIG. 10

1 0 1 1 0 1 1 0 0 1 0 1 0 1 0 1 0 0... 0 0 1

Wake-up information S:

First part: 10110 (5 bits)

First encoded data: 100100101011001 (15 bits)

1101

1103

1105

Zero padding: 100100101011001**000**

1 padding: 100100101011001**111**

Copy supplement: 100100101011001**100**

1102

1104

1106

FIG. 11

EP 4 580 263 A1

1 0 1 1 0 1 1 0 0 1 0 1 0 1 0 1 0... 0 0 1

Wake-up information S:

Second part: 1 1 0 0 1 0 1 0 1 0 1 0... 0 0 1(43 bits)

Second encoded data: 1001001010110... 01001(127 bits)

1201

1203

$0^{th}$ bit  $5^{th}$ bit  $10^{th}$ bit

Directly truncate
last three bits: 1001001010110... 01001

Truncate three bits according
to a predetermined rule: 1001001010110... 01001

1202

1204

Actually sent data: 1001001010110... 01 (124 bits)

Actually sent data: 1001001010110... 01(124 bits)

FIG. 12

EP 4 580 263 A1

First device

Second device

First part of wake-up information — S1301

When the first device receives the first part of the wake-up information and the first part includes an identifier of the first device or a group identifier of the first device, the first device monitors a second part of the wake-up information — S1302

Second part of the wake-up information — S1303

The first device wakes up a second link when the first device receives the second part, where power consumption of the second link is greater than power consumption of a first link — S1304

FIG. 13

1400

Receiving module — 1401

Processing module — 1402

FIG. 14

1500

Sending module 1501

**FIG. 15**

1600

1601

Processor 1603

Instructions

1602

Memory 1604

Program

1605

Communication unit

**FIG. 16**

## INTERNATIONAL SEARCH REPORT

| | International application No. |
|---|---|
| | **PCT/CN2023/122193** |

**A. CLASSIFICATION OF SUBJECT MATTER**

H04W52/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI: 标识, 长度, 唤醒, 链路, 功耗, 监听, 译码器, WUR, identity, length, wake-up, wake up radio, monitor, decoder, power consumption

**C. DOCUMENTS CONSIDERED TO BE RELEVANT**

| Category* | Citation of document, with indication, where appropriate, of the relevant passages | Relevant to claim No. |
|---|---|---|
| X | CN 109937594 A (QUALCOMM INC.) 25 June 2019 (2019-06-25) description, paragraphs [0114]-[0252], and figures 1-19 | 1-22 |
| A | CN 114828168 A (GUANGDONG OPPO MOBILE TELECOMMUNICATIONS CORP., LTD.) 29 July 2022 (2022-07-29) entire document | 1-22 |
| A | CN 110121203 A (HUAWEI TECHNOLOGIES CO., LTD.) 13 August 2019 (2019-08-13) entire document | 1-22 |
| A | US 2018234918 A1 (QUALCOMM INC.) 16 August 2018 (2018-08-16) entire document | 1-22 |
| A | INTEL CORP. "Analysis of Impact of Wake-up Signaling on Power Consumption and Resource Efficiency for EfeMTC" *3GPP TSG RAN WG1 Meeting #89 R1-1707315*, 19 May 2017 (2017-05-19), entire document | 1-22 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/122193** |

| Patent document cited in search report | | | Publication date (day/month/year) | Patent family member(s) | | | Publication date (day/month/year) |
| --- | --- | --- | --- | --- | --- | --- | --- |
| CN | 109937594 | A | 25 June 2019 | WO | 2018089779 | A1 | 17 May 2018 |
| | | | | EP | 3539327 | A1 | 18 September 2019 |
| | | | | US | 2018132176 | A1 | 10 May 2018 |
| | | | | HK | 40008163 | A1 | 06 January 2023 |
| CN | 114828168 | A | 29 July 2022 | WO | 2022156364 | A1 | 28 July 2022 |
| CN | 110121203 | A | 13 August 2019 | WO | 2019149105 | A1 | 08 August 2019 |
| US | 2018234918 | A1 | 16 August 2018 | | None | | |

Form PCT/ISA/210 (patent family annex) (July 2022)

**EP 4 580 263 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211321636

- CN 202211738572